# EUROPÄISCHE PATENTANMELDUNG

(11) **EP 3 502 156 A1**
(43) Veröffentlichungstag der Anmeldung: **26.06.2019**
(21) Anmeldenummer: 17209691.9
(22) Anmeldetag: 21.12.2017
(51) Int. Cl.: C08G 18/72, C08G 18/73, C08G 18/75, C08G 18/79, C08G 18/08, C08G 18/12, C08G 18/32, C08G 18/48, C09J 175/00

(54) **KLEBSTOFF AUF BASIS EINES POLYURETHANHARNSTOFFS ENTHALTEND CARBONSÄUREGRUPPEN UND DEREN VERNETZUNG**

(71) Anmelder: Covestro Deutschland AG, 51373 Leverkusen (DE)
(72) Erfinder: Dörr, Sebastian, 40593 Düsseldorf (DE); Weiser, Marc-Stephan, 51515 Kürten-Dürscheid (DE); Plug, Sascha, 51375 Leverkusen (DE)
(74) Vertreter: Levpat

(57) **Zusammenfassung**

Die vorliegende Erfindung betrifft einen bevorzugt amorphen Klebstoff, herstellbar aus einer wässrigen Polyurethanharnstoff-Dispersion, enthaltend einen speziellen bevorzugt amorphen Polyurethanharnstoff mit durch Vernetzung mit einer Polycarbodiimid-Komponente einstellbarer Klebkraft, sowie eine Klebstoffschicht und ein Produkt enthaltend den Klebstoff. Ebenfalls Gegenstand der Erfindung ist eine wässrige Dispersion enthaltend den speziellen, bevorzugt amorphen Polyurethanharnstoff sowie dessen möglichen Verwendungen. Dieser, bevorzugt amorphe Klebstoff lässt sich auf sehr effiziente Weise herstellen.

## Beschreibung

Die vorliegende Erfindung betrifft einen bevorzugt amorphen Klebstoff, herstellbar aus einer wässrigen Polyurethanharnstoff-Dispersion, enthaltend einen speziellen bevorzugt amorphen Polyurethanharnstoff mit durch Vernetzung mit einer Polycarbodiimid-Komponente einstellbarer Klebkraft, sowie eine Klebstoffschicht und ein Produkt enthaltend den Klebstoff. Ebenfalls Gegenstand der Erfindung ist eine wässrige Dispersion enthaltend den speziellen, bevorzugt amorphen Polyurethanharnstoff sowie dessen möglichen Verwendungen. Dieser, bevorzugt amorphe Klebstoff lässt sich auf sehr effiziente Weise herstellen.

In vielen, insbesondere medizinischen Anwendungen, wie beispielsweise selbstklebenden Bandagen, Pflastern oder anderen Wundabdeckungsmitteln kommen selbstklebende Klebstoffe zum Einsatz. Die Anforderungen an selbstklebende Klebstoffe können sehr vielfältig sein. Den selbstklebenden Klebstoffen ist gemein, dass der Klebstoff zwar gut auf der zu fixierenden Oberfläche haftet, aber gleichzeitig gut wieder entfernt werden kann, möglichst ohne Rückstände. In der medizinischen Anwendung ist es sehr vorteilhaft, einen Klebstoff zur Fixierung unterschiedlichster Gegenstände, wie Pflaster, Bandagen, Tapes oder andere Wundabdeckungsmittel bereitzustellen, die einerseits gut über einen langen Zeitraum, wie beispielsweise mehrere Tage oder Wochen haften, aber nach der Tragezeit ohne Schädigung der oberen Hautschichten und bevorzugt ohne Schmerzen wieder entfernbar sind. Darüber hinaus sollte der Klebstoff keine Rückstände nach dessen Entfernung auf der Haut zurücklassen, keine Allergien auslösen, um Hautreizungen zu vermeiden, atmungsaktiv sein, dabei wasserstabil und eine gute Haftung auf dem Trägermaterial des Klebers (z.B. Folie) haben.

Oft werden in solchen Produkten selbstklebende Acrylat- oder Silikonklebstoffe verwendet. Während Acrylatklebstoffe auch hohe Klebstärken ermöglichen, sind sie häufig durch ihr thermoplastisches Fließverhalten auf der Haut nach längerer Tragezeit nur unter Schädigung der obersten Hautschichten und mit großen Schmerz wieder abziehbar, sie führen zu starken Hautirritationen und ggf. zu allergenen Reaktionen. Silikonklebstoffe dagegen sind häufig nur von geringerer Klebkraft und ermöglichen daher für verschiedene medizinische Anwendungen wie NPWT (Unterdruck-Wundtherapie oder Vakuumtherapie), Ostomie (künstlicher Darmausgang) und verschiedene medizinische Klebebänder, auch Tapes genannt, z.B. chirurgische Tapes, keine ausreichend hohe Klebkraft für eine sichere Verklebung, insbesondere über einen längeren Zeitraum.

Generell muss dabei eine gute Balance aus ausreichender Klebkraft für eine ausreichend lange Tragezeit und sanftem Ablösen des Klebstoffs beim Entfernen des Verbands von der Haut gefunden werden. Dies ist von Anwendung zu Anwendung verschieden. Klebstoffe auf Basis der unveröffentlichten europäischen Patentanmeldung mit der Anmeldenummer EP16177199.3 ermöglichen jedoch keine einstellbare Klebkraft. Für die Verklebung auf Wunden, sensibler oder brüchiger Haut sind die Klebstoffe aus der EP16177199.3 durch ihre hohe Klebstärke und dem Aufbau der Klebkraft über die Zeit wenig geeignet. Dagegen sind bisherige Klebstoffe im Markt wie die in EP897406, EP147588 und EP57839 beschriebenen Systeme nur durch einen komplizierten Zweikomponenten-Mischprozess herzustellen, was für typische Klebstoffhersteller eine komplexe und oft schwer zu beherrschende Vorgehensweise ist.

Eine Aufgabe der vorliegenden Erfindung ist es, wenigstens einen Teil der Nachteile des Standes der Technik wenigstens zu einem Teil zu verbessern.

Weiterhin ist eine Aufgabe der vorliegenden Erfindung einen hautfreundlichen Haftklebstoff für medizinische Anwendung mit einer ausreichend hohen Klebkraft bereitzustellen, insbesondere in einem Bereich von 0,3 N/20 mm bis 25 N/20 mm zu definieren gegen Aluminium gemäß DIN EN 1464 (90° Rollenschälprüfung) auf einer Zugprüfmaschine gemäß DIN EN ISO 527-1.

Eine weitere Aufgabe der Erfindung ist es, einen Klebstoff, beispielsweise in Form einer Klebstoffschicht bereitzustellen, die eine einfache und kostengünstige Herstellweise erlaubt.

Es ist weiterhin eine Aufgabe der Erfindung einen Klebstoff bereitzustellen, der eine möglichst einfache Verarbeitbarkeit erlaubt und über eine möglichst lange "Potlife" also ein möglichst großes Zeitfenster der Verarbeitbarkeit verfügt, so dass direkt am Herstellungsort bevorzugt aus einem einzigen Gefäß bevorzugt für mehrere Stunden mit der vollständigen Mischung aller Komponenten der Formulierung heraus gearbeitet werden kann.

Weiterhin ist eine Aufgabe der Erfindung einen Klebstoff, beispielsweise in Form einer Klebstoffschicht bereitzustellen, der eine gute Hautverträglichkeit, bei hohem Tragekomfort und guter Wiederentfernbarkeit aufweist. Insbesondere sollte der Tragekomfort und die rückstandsfreie Wiederentfernbarkeit auch nach mehreren Wochen Tragezeit, insbesondere auf Wunden und auf brüchiger oder sensibler Haut noch gewährleistet sein.

Wiederum eine Aufgabe der Erfindung ist es, einen Klebstoff beispielsweise in Form einer Klebstoffschicht bereitzustellen, der eine hohe Klebkraft kombiniert mit einer guten Hautverträglichkeit und möglichst guter Wiederentfernbarkeit, insbesondere auf Wunden und auf brüchiger oder sensibler Haut aufweist.

Eine weitere Aufgabe der Erfindung ist es, einen Klebstoff, beispielsweise in Form einer Klebstoffschicht, bereitzustellen, die die gleichen Vorteile, wie für den Klebstoff beschrieben aufweist und dabei in verschiedenen medizinischen aber auch technischen Anwendungen, beispielsweise sowohl im "professional woundcare" Bereich als auch im OTC woundcare Bereich einsetzbar ist.

Weiterhin ist eine Aufgabe der Erfindung eine wässrige Polyurethanharnstoff-Dispersion bereitzustellen, aus der auf einfache Weise der Klebstoff bzw. die Klebstoffschicht gemäß der Erfindung gewonnen werden kann.

Es ist weiterhin eine Aufgabe der Erfindung, ein Verfahren zu Herstellung einer Klebstoffschicht bereitzustellen, das die erfindungsgemäße Polyurethanharnstoff-Dispersion enthält und sämtliche Vorteile der erfindungsgemäßen Klebstoffschicht aufweist.

Eine Aufgabe der Erfindung ist es, eine Verwendung des Klebstoffs bzw. der Klebstoffschicht zur Befestigung von Gegenständen vorzugsweise auf der Haut bereitzustellen, wobei der Klebstoff bzw. die Klebstoffschicht die bereits erwähnten Vorteile in den Gegenstand bzw. der Befestigung einbringt.

Eine weitere Aufgabe der Erfindung ist es, eine Verwendung einer Polyurethanharnstoff-Dispersion zur Herstellung eines Klebstoffs, einer Klebstoffschicht oder eines Produktes bereitzustellen, die die bereits erwähnten Vorteile aufweisen.

Mindestens eine der Aufgaben wird gelöst durch einen Klebstoff gemäß des Gegenstands des Anspruch 1. Besondere Ausführungsformen sind in den abhängigen Ansprüchen beschrieben. Weiterhin ist mindestens ein Teil der Aufgaben durch eine Klebstoffschicht oder ein Produkt beinhaltend den erfindungsgemäßen Klebstoff gelöst. Wiederum ein Teil der Aufgaben wird durch die Ausführung des Verfahrens zur Herstellung der Klebstoffschicht gelöst.

Ein erster Gegenstand der Erfindung betrifft einen Klebstoff herstellbar aus einer wässrigen Polyurethanharnstoff-Dispersion, enthaltend
(V1) einen bevorzugt amorphen Polyurethanharnstoff (V1), welcher erhältlich ist, durch Umsetzung von wenigstens
   A) einer aliphatischen Polyisocyanat-Komponente mit einer mittleren Isocyanatfunktionalität von ≥ 1,8 und ≤ 2,6,
   B) einer polymeren Polyether-Polyol-Komponente,
   C) einer aminofunktionellen Kettenverlängerer-Komponente mit mindestens 2 isocyanatreaktiven Aminogruppen, enthaltend wenigstens eine aminofunktionelle Verbindung C1), die keine ionischen oder ionogenen Gruppen aufweist und/oder eine aminofunktionelle Verbindung C2), die ionische oder ionogene Gruppen aufweist,
   D) gegebenenfalls weiteren hydrophilierenden Komponenten, die unterschiedlich sind von C2),
   E) gegebenenfalls hydroxyfunktionellen Verbindungen mit einem Molekulargewicht von 62 bis 399 mol/g,
   F) gegebenenfalls weitere polymere Polyole, welche unterschiedlich sind von B),
   G) gegebenenfalls einer Verbindung, die genau eine isocyanatreaktive Gruppe aufweist, oder einer Verbindung, die mehr als eine isocyanatreaktive Gruppe aufweist, wobei nur eine der isocyanatreaktiven Gruppen unter den gewählten Umsetzungsbedingungen mit den in der Reaktionsmischung vorhandenen Isocyanatgruppen reagiert und
   H) gegebenenfalls einer aliphatischen Polyisocyanat-Komponente mit einer mittleren Isocyanatfunktionalität von > 2,6 und ≤ 4,
   wobei mindestens eine der Komponenten C2) oder D) in dem Klebstoff enthalten ist,
   wobei die Polyurethanharnstoff-Dispersion Carboxygruppen oder Carboxylatgruppen aufweist, sowie
(V2) eine Polycarbodiimid-Komponente.

Bevorzugt weist der Klebstoff ein Gewichts-Verhältnis des Polyurethanharnstoff (V1) zu der Polycarbodiimid-Komponente (V2) in einem Bereich von 80:1 bis 1,2:1 oder bevorzugt in einem Bereich von 60:1 bis 2:1, oder bevorzugt in einem Bereich von 40:1 bis 4:1 auf.

Bevorzugt weist die Reaktionsmischung aus (V1) und (V2) bei der Herstellung des Klebstoffes ein molares Verhältnis der Carboxy- oder Carboxylatgruppen aus (V1) zu Carbodiimidgruppen aus (V2) in einem Bereich von 5:1 bis 1:5, oder bevorzugt in einem Bereich von 2:1 bis 1:2 oder bevorzugt in einem Bereich von 1,3:1 bis 1: 1,3 auf.

Bevorzugt ist der Klebstoff amorph. Amorph bedeutet im Sinne dieser Erfindung, dass der Polyurethanharnstoff im in der im folgenden ausgeführten Messmethode genannten Temperaturbereich keine oder nur so geringe kristalline Anteile ausbildet, dass mittels der beschriebenen DSC Messungen nur ein oder mehrere Glasübergangspunkte T_{g}, aber keine Schmelzbereiche mit einer Schmelzenthalpie ≥ 20 J/g in dem genannten Temperaturbereich gefunden werden können

Bevorzugt weist die wässrige Polyurethanharnstoff-Dispersion ein Gewichts-Verhältnis des Polyurethanharnstoff (V1) zu der Polycarbodiimid-Komponente (V2) in einem Bereich von 80:1 bis 1,2:1 oder bevorzugt in einem Bereich von 60:1 bis 2:1, oder bevorzugt in einem Bereich von 40:1 bis 4:1.

Bevorzugt amorphe Polyurethanharnstoffe im Sinne der Erfindung sind polymere Verbindungen, die mindestens zwei, bevorzugt mindestens drei Urethan-Gruppen-haltige Wiederholungseinheiten aufweisen: 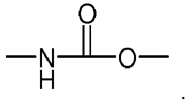 Erfindungsgemäß weisen die bevorzugt amorphen Polyurethanharnstoffe herstellungsbedingt auch Harnstoff-Gruppen-haltige Wiederholungseinheiten auf, 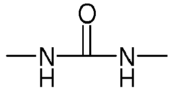 wie sie insbesondere bei der Umsetzung von isocyanatterminierten Präpolymeren mit aminofunktionellen Verbindungen gebildet werden.

Unter ionogenen Gruppen werden im Sinne dieser Erfindung solche funktionellen Gruppen verstanden, die in der Lage sind, beispielsweise durch Neutralisation mit einer Base, ionische Gruppen zu bilden.

Der Polyurethanharnstoff der Polyurethanharnstoff-Dispersion weist erfindungsgemäß Carboxygruppen oder Carboxylatgruppen auf. Diese können durch jede der verwendeten Komponenten A) bis H) oder weiteren verwendeten Komponenten in den Polyurethanharnstoff eingebracht werden. Bevorzugt werden die Carboxygruppen oder Carboxylatgruppen durch die Komponente B) eingebracht.

Bevorzugt weist das Polyurethanharnstoff der Polyurethanharnstoff-Dispersion einen Gehalt an Carboxygruppen und/oder Carboxylatgruppen in einem Bereich von 0,01 bis 10 Gew.-%, oder bevorzugt in einem Bereich von 0,02 bis 8 Gew.-%, oder bevorzugt in einem Bereich von 0,05 bis 5 Gew.-%, bezogen auf die Gesamtmasse des Polyurethanharnstoffs auf.

Beispiele für Komponenten, die Carboxygruppen bzw. Carboxylatgruppen enthalten und als Bausteine für die Herstellung von (V1) benutzt werden können sind Dimethylolpropionsäure, Hydroxypivalinsäure, natürliche sowie nicht-natürliche Aminosäuren, wie 6-Aminohexansäure, Alanin, Asparaginsäure, Glutaminsäure, Glutamin, Glycin, Lysin, Leucin, Isoleucin oder Mischungen aus mindestens zwei hiervon.

Die Komponente A) kann jedes Polyisocyanat sein, das der Fachmann hierfür verwenden würde. Als Komponente A) bevorzugt geeignete Polyisocyanate sind insbesondere die dem Fachmann an sich bekannten aliphatischen Polyisocyanate mit einer mittleren Isocyanatfunktionalität von ≥ 1,8 und ≤ 2,6. Der Begriff aliphatisch umfasst dabei auch cycloaliphatische und/oder araliphatische Polyisocyanate.

Unter der mittleren Isocyanatfunktionalität wird dabei die durchschnittliche Anzahl an Isocyanatgruppen pro Molekül verstanden.

Bevorzugte Polyisocyanate sind solche des Molekulargewichtsbereichs von 140 bis 336 g/mol. Besonders bevorzugt sind diese ausgewählt aus der Gruppe bestehend aus. 1,4-Diisocyanatobutan (BDI), 1,5-Pentandiisocyanat, (PDI) 1,6-Diisocyanatohexan (HDI), 1,3-Bis(isocyanatomethyl)benzol (1,3-Xylylendiisocyanat, XDI), 1,4-Bis(isocyanatomethyl)benzol (1,4-Xylylendiisocyanat, XDI), 1,3-Bis(1-isocyanato-1-methyl-ethyl)benzol (TMXDI), 1,4-Bis(1-isocyanato-1-methyl-ethyl)benzol (TMXDI), 4-Isocyanatomethyl-1,8-octandiisocyanat (Trisisocyanatononan (TIN)), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan sowie die cycloaliphatischen Diisocyanate 1,3- bzw. 1,4-Diisocyanatocyclohexan, 1,4-Diisocyanato-3,3,5-trimethylcyclohexan, 1,3-Diisocyanato-2(4)-methylcyclohexan, 1-Isocyanato-3,3,5-trimethyl-5-isocyanatomethylcyclohexan (Isophorondiisocyanat, IPDI), 1-Isocyanato-1-methyl-4(3)isocyanato-methylcyclohexan, 1,8-Diisocyanato-p-menthan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetramethyl-1,1'-bi(cyclohexyl), 4,4'- und/oder 2,4'-Diisocyanatodicyclohexylmethan, 4,4'-Diisocyanato-3,3'-dimethyldicyclohexylmethan, 4,4'-Diisocyanato-3,3',5,5'-tetramethyldicyclohexylmethan, 1,3-Diisocyanatoadamantan, und 1,3-Dimethyl-5,7-diisocyanatoadamantan oder beliebige Gemische solcher Isocyanate. Ganz besonders bevorzugt sind die Polyisocyanate ausgewählt aus 1,4-Butylendiisocyanat, 1,5-Pentamethylendiisocyanat (PDI), 1,6-Hexamethylendiisocyanat (HDI), Isophorondiisocyanat (IPDI), 2,2,4- und/oder 2,4,4-Trimethylhexamethylendiisocyanat, die isomeren Bis-(4,4'-isocyanatocyclohexyl)methane oder deren Mischungen beliebigen Isomerengehalts (H12-MDI), 1,4-Cyclohexylendiisocyanat, 4-Isocyanatomethyl-1,8-octandiisocyanat (Nonantriisocyanat) sowie Alkyl-2,6-diisocyanatohexanoate (Lysindiisocyanate) mit C1-C8-Alkylgruppen.

Neben den vorstehend genannten Polyisocyanaten können auch modifizierte Diisocyanate, die eine mittlere Isocyanatfunktionalität ≥ 2 und ≤ 2,6 aufweisen, mit Uretdion-, Isocyanurat-, Urethan-, Allophanat-, Biuret-, Iminooxadiazindion- oder Oxadiazintrionstruktur sowie Mischungen aus diesen und/oder den oben stehenden anteilig eingesetzt werden.

Bevorzugt handelt es sich um Polyisocyanate oder Polyisocyanatgemische der vorstehend genannten Art mit ausschließlich aliphatisch oder cycloaliphatisch gebundenen Isocyanatgruppen oder Mischungen aus diesen und einer mittleren NCO-Funktionalität der Mischung von ≥ 1,8 und ≤ 2,6 und besonders bevorzugt ≥ 2,0 und ≤ 2,4.

In einer bevorzugten Ausführungsform des Klebstoffes enthält die Komponente A) ein aliphatisches oder cycloaliphatisches Polyisocyanat ausgewählt aus der Gruppe bestehend aus HDI, IPDI und/oder H12-MDI oder deren Modifikationsprodukten, ganz besonders bevorzugt ausgewählt aus HDI und/oder IPDI.

In einer insbesondere bevorzugten Variante liegen als Komponente A) IPDI und HDI im Gemisch vor.

Bevorzugt liegt das Gewichtsverhältnis von IPDI:HDI für die Polyisocyanat-Komponente A) in einem Bereich von 1,05 bis 10, besonders bevorzugt in einem Bereich von 1,1 bis 5, und ganz besonders bevorzugt in einem Bereich von 1,1 bis 1,5.

In einer bevorzugten Ausführungsform wird zur Herstellung des erfindungsgemäß verwendeten bevorzugt amorphen Polyurethanharnstoffs ≥ 5 und ≤ 40 Gew.-% der Komponente A) und besonders bevorzugt ≥ 10 und ≤ 35 Gew.-% der Komponente A), jeweils bezogen auf die Gesamtmasse des bevorzugt amorphen Polyurethanharnstoffs, eingesetzt.

In einer weiteren bevorzugten Ausführungsform wird zur Herstellung des bevorzugt amorphen Polyurethanharnstoffs auch die Komponente H), eine aliphatische Polyisocyanat-Komponente mit einer mittleren Isocyanatfunktionalität (mittlere Anzahl Isocyanatgruppen pro Molekül) von > 2,6 und ≤ 4, vorzugsweise ≥ 2,8 und ≤ 3,8 eingesetzt. Die Komponente H) wird dabei bevorzugt im Gemisch mit Komponente A) eingesetzt.

Als Komponente H) besonders geeignet sind oligomere Diisocyanate, die eine Funktionalität > 2,6 und ≤ 4, vorzugsweise ≥ 2,8 und ≤ 3,8 aufweisen, mit Isocyanurat-, Urethan-, Allophanat-, Biuret-, Iminooxadiazindion- oder Oxadiazintrionstruktur. Ganz besonders bevorzugt enthält H) Isocyanuratstrukturen.

Bevorzugt besteht die aliphatische Polyisocyanat-Komponente H) aus einem aliphatischen oder cycloaliphatischen Polyisocyanat-Oligomer basierend auf HDI, IPDI und/oder H12-MDI, ganz besonders bevorzugt basierend auf HDI.

Das Molverhältnis der NCO-Gruppen aus Komponente A) zu Komponente H) beträgt dabei bevorzugt 100:0,5 bis 100: 50; besonders bevorzugt 100: 2 bis 100: 15 und ganz besonders bevorzugt 100:3 bis 100: 8.

In einer bevorzugten Ausführungsform wird zur Herstellung des erfindungsgemäß verwendeten bevorzugt amorphen Polyurethanharnstoffs ≥ 0 und ≤ 10 Gew.-% der Komponente H) und besonders bevorzugt ≥ 0,1 und ≤ 3 Gew.-% der Komponente H), jeweils bezogen auf die Gesamtmasse des bevorzugt amorphen Polyurethanharnstoffs, eingesetzt.

Die erfindungsgemäß als Komponente B) eingesetzten polymeren Polyether-Polyole weisen bevorzugt zahlenmittlere Molekulargewichte in einem Bereich von 400 bis 8000 g/mol, bevorzugt in einem Bereich von 600 bis 6000 g/mol, oder bevorzugt in einem Bereich von 1000 bis 3000 g/mol, bestimmt durch Gelpermeationschromatographie gegenüber Polystyrol-Standard in Tetrahydrofuran bei 23°C, und/oder einer OH-Funktionalität von bevorzugt in einem Bereich von 1,5 bis 6, bevorzugter in einem Bereich von 1,8 bis 3, besonders bevorzugt von in einem Bereich von 1,9 bis 2,1 auf. Der Ausdruck "polymere" Polyether-Polyole bedeutet hier insbesondere, dass die genannten Polyole mindestens zwei, bevorzugt mindestens drei miteinander verbundene Wiederholungseinheiten aufweisen.

Das zahlenmittlere Molekulargewicht wird im Rahmen dieser Anmeldung stets bestimmt durch Gelpermeationschromatographie (GPC) in Tetrahydrofuran bei 23°C. Es wird dabei vorgegangen nach DIN 55672-1: "Gelpermeationschromatographie, Teil 1 - - Tetrahydrofuran als Elutionsmittel" (SECurity GPC-System von PSS Polymer Service, Flussrate 1,0 ml/min; Säulen: 2xPSS SDV linear M, 8×300 mm, 5 µm; RID-Detektor). Dabei werden Polystyrolproben bekannter Molmasse zur Kalibrierung verwendet. Die Berechnung des zahlenmittleren Molekulargewichts erfolgt softwaregestützt. Basislinienpunkte und Auswertegrenzen werden entsprechend der DIN 55672 Teil 1 festgelegt.

Geeignete Polyetherpolyole sind beispielsweise die an sich bekannten Additionsprodukte von Styroloxid, Ethylenoxid, Propylenoxid, Butylenoxid und/oder Epichlorhydrin an di- oder polyfunktionelle Startermoleküle. So sind insbesondere Polyalkylenglykole, wie Polyethylen-, Polypropylen- und/oder Polybutylenglykole anwendbar, insbesondere mit den oben genannten bevorzugten Molekulargewichten. Als geeignete Startermoleküle können alle dem Stand der Technik nach bekannten Verbindungen eingesetzt werden, wie zum Beispiel Wasser, Butyldiglykol, Glycerin, Diethylenglykol, Trimethyolpropan, Propylenglykol, Sorbit, Ethylendiamin, Triethanolamin, 1,4-Butandiol.

In einer bevorzugten Ausführungsform des Klebstoffes enthält die Komponente B) Poly(propylenglykol)polyetherpolyole. Bevorzugt beinhaltet der Klebstoff Poly(propylenglykol)-polyetherpolyole in einem Bereich von 50 bis 100 Gew.-%, oder bevorzugt in einem Bereich von 70 bis 100 Gew.-% oder bevorzugt in einem Bereich von 90 bis 100 Gew.-%, besonders bevorzugt zu 100 Gew.-%, jeweils bezogen auf das Gesamtgewicht der Komponente B).

Weist die Komponente B) mehr als 50 Gew.-% Poly(propylenglykol)polyetherpolyole, bezogen auf die Summe aller Bestandteile der Komponente B) auf, so wird gegebenenfalls eine geringe Menge an Komponente G) eingesetzt oder bevorzugt Komponente G) gar nicht eingesetzt. Sollte die Komponente B) zur Herstellung des Klebstoffes mehr als 10 Gew.-%, bevorzugt mehr als 20 Gew.-%, oder bevorzugt mehr als 30 Gew.-%, bezogen auf die Summe aller Bestandteile der Komponente B)Poly(tetramethylen)polyetherpolyole aufweisen, so ist es bevorzugt, dass Komponente G) anwesend ist.

In einer bevorzugten Ausführungsform des Klebstoffes weist die Komponente B) eine mittlere Molekularmasse in einem Bereich von 400 bis 4000 g/mol, oder bevorzugt in einem Bereich von 500 bis 3500 g/mol, oder bevorzugt in einem Bereich von 800 bis 3000 g/mol auf.

In einer weiteren bevorzugten Ausführungsform des Klebstoffes enthält die Komponente B) ein Gemisch aus Poly(propylenglykol)polyetherpolyole mit unterschiedlichem mittleren Molekulargewicht oder besteht daraus, wobei sich die Poly(propylenglykol)polyetherpolyole in ihren zahlenmittleren Molekulargewichten um wenigstens 100 g/mol, bevorzugt um wenigstens 200 g/mol, oder bevorzugt um wenigstens 400 g/mol, oder bevorzugt um wenigstens 800 g/mol, oder bevorzugt um wenigstens 1000 g/mol unterscheiden. Bevorzugt unterscheiden sich die zahlenmittleren Molekulargewichte der Poly(propylenglykol)polyetherpolyole um nicht mehr als 5000 g/mol, oder um nicht mehr als 4000 g/mol, oder um nicht mehr als 3000 g/mol.

In einer besonders bevorzugten Ausführungsform enthält die Komponente B) ein Gemisch aus Poly(propylenglykol)polyetherpolyolen I mit einem zahlenmittleren Molekulargewichte Mₙ von ≥ 400 und ≤ 1500 g/mol, besonders bevorzugt von ≥ 600 und ≤ 1200 g/mol, ganz besonders bevorzugt von 1000 g/mol und Poly(propylenglykol)polyetherpolyolen II mit einem zahlenmittleren Molekulargewichte Mₙ von ≥ 1500 und ≤ 8000 g/mol, besonders bevorzugt von ≥ 1800 und ≤ 3000 g/mol, ganz besonders bevorzugt von 2000 g/mol.

Das Gewichtsverhältnis der Poly(propylenglykol)polyetherpolyolen I zu den Poly(propylenglykol)polyetherpolyolen II liegt bevorzugt im Bereich von 0,01 bis 10, besonders bevorzugt im Bereich von 0,02 bis 5, ganz besonders bevorzugt im Bereich von 0,05 bis 1.

Erfindungsgemäß wird zur Herstellung des bevorzugt amorphen Polyurethanharnstoffs eine aminofunktionelle Kettenverlängerer-Komponente C) mit mindestens 2 isocyanatreaktiven Aminogruppen, enthaltend wenigstens eine aminofunktionelle Verbindung C1), die keine ionischen oder ionogenen Gruppen aufweist und/oder eine aminofunktionelle Verbindung C2), die ionische oder ionogene Gruppen aufweist, eingesetzt.

Die aminofunktionellen Verbindungen der Komponente C) Komponente werden bevorzugt aus primären und/oder sekundären Diaminen ausgewählt. Insbesondere umfassen die aminofunktionellen Verbindungen C) mindestens ein Diamin.

In einer bevorzugten Ausführungsform des Klebstoffes umfasst die aminofunktionelle Komponente C) wenigstens eine aminofunktionelle Verbindung C2), die ionische und/oder ionogene Gruppen aufweist. Die aminofunktionelle Verbindung C2) ist obligatorisch, wenn die Komponente D) nicht in der wässrigen Polyurethanharnstoff-Dispersion zur Herstellung des erfindungsgemäßen Klebstoffs vorhanden ist.

Bevorzugt umfasst die aminofunktionelle Komponente C) sowohl aminofunktionelle Verbindungen C2), die ionische und/oder ionogene Gruppe aufweisen, als auch aminofunktionelle Verbindungen C1), die keine ionische oder ionogene Gruppe aufweisen.

Beispielsweise können als Komponente C1) organische Di- oder Polyamine wie beispielsweise 1,2-Ethylendiamin, 1,2- und 1,3-Diaminopropan, 1,4-Diaminobutan, 1,6-Diaminohexan, Isophorondiamin (IPDA), Isomerengemisch von 2,2,4- und 2,4,4-Trimethylhexamethylendiamin, 2-Methylpentamethylendiamin, Diethylentriamin, 4,4-Diaminodicyclohexylmethan und/oder Dimethylethylendiamin oder Mischungen aus mindestens zwei hiervon eingesetzt werden.

Bevorzugt ist die Komponente C1) ausgewählt aus der Gruppe bestehend aus 1,2-Ethylendiamin, Bis(4-aminocyclohexyl)methan, 1,4-Diaminobutan, IPDA, Ethanolamin, Diethanolamin und Diethylentriamin oder einer Mischung aus mindestens zwei hiervon.

In einer weiteren bevorzugten Ausführungsform enthält die Komponente C1) > 75 mol%, besonders bevorzugt ≥ 80 mol%, ganz besonders bevorzugt ≥ 85 mol%, weiterhin bevorzugt ≥ 95 mol% und des Weiteren bevorzugt 100 mol% 1,2-Ethylendiamin oder IPDA oder ein Gemisch aus 1,2-Ethylendiamin und IPDA, wobei die Summe der beiden Amine in Bezug auf die Gesamtmenge an C1) bevorzugt in den genannten Anteilen vorliegt.

Bevorzugt umfasst die hydrophilierende Komponente C2) mindestens eine anionisch hydrophilierende Verbindung. Weiterhin bevorzugt beinhaltet die hydrophilierende Komponente C2) eine anionisch hydrophilierende Verbindung zu mindestens 80 Gew.-%, oder bevorzugt zu mindestens 90 Gew.-%, bezogen auf das Gesamtgewicht der Komponente C2). Besonders bevorzugt besteht die Komponente C2) aus ausschließlich anionisch hydrophilierenden Verbindungen.

Geeignete anionisch hydrophilierende Verbindungen enthalten wenigstens eine anionische oder ionogene Gruppe, die in eine anionische Gruppe überführt werden kann. Des Weiteren bevorzugt weisen geeignete anionisch hydrophilierende Verbindungen wenigstens zwei Aminogruppen und besonders bevorzugt zwei Aminogruppen auf. Besonders bevorzugt umfasst die hydrophilierende Komponente C2) eine anionisch hydrophilierende Verbindung, die wenigstens eine anionische oder ionogene Gruppe und wenigstens zwei Aminogruppen aufweist oder besteht daraus.

Geeignete anionisch hydrophilierende Verbindungen als Komponente C2), im Weiteren auch Hydrophilierungsmittel C2) genannt, enthalten bevorzugt eine Sulfonsäure- oder Sulfonatgruppe, besonders bevorzugt eine Natriumsulfonatgruppe. Geeignete anionisch hydrophilierende Verbindungen als Komponente C2) sind insbesondere die Alkalimetallsalze der Mono- und Diaminosulfonsäuren. Beispiele solcher anionischen Hydrophilierungsmittel sind Salze der 2-(2-Aminoethylamino)ethansulfonsäure, Ethylendiamin-propyl- oder -butylsulfonsäure oder 1,2- oder 1,3-Propylendiamin-β-ethylsulfonsäure oder Mischungen aus mindestens zwei hiervon.

Besonders bevorzugte anionische Hydrophilierungsmittel C2) sind solche, die Sulfonatgruppen als ionische Gruppen und zwei Aminogruppen enthalten, wie die Salze der 2-(2-Aminoethylamino)ethylsulfonsäure und 1,3-Propylendiamin-β-ethylsulfonsäure. Ganz besonders bevorzugt wird 2-(2-Aminoethylamino)ethylsulfonsäure oder deren Salze als anionisches Hydrophilierungsmittel C2) eingesetzt.

Gegebenenfalls kann die anionische Gruppe in der Komponente C2) auch eine Carboxylat- bzw. Carbonsäuregruppe sein. Beispiele für Carbonsäuren sind 6-Aminohexansäure, Alanin, Asparaginsäure, Glutaminsäure, Glutamin, Glycin, Lysin, Leucin und Isoleucin oder Mischung aus mindestens zwei hiervon. Weitere Beispiele für geeignete Substanzen für die Komponente C2) sind bevorzugt aus Diaminocarbonsäuren ausgewählt. Als Beispiel für Diaminocarbonsäuren sei Lysin genannt.

Bei dieser alternativen Ausführungsform müssen jedoch die Carbonsäure-basierenden Komponenten C2) in höheren Konzentrationen eingesetzt werden, verglichen mit solchen Komponenten C2), die Sulfonat- oder Sulfonsäuregruppen tragen. Besonders bevorzugt werden daher zur Herstellung des bevorzugt amorphen Polyurethanharnstoffs keine hydrophilierenden Verbindungen, die ausschließlich Carboxylatgruppen als anionische Gruppen der Komponente C2) tragen eingesetzt.

In einer bevorzugten Ausführungsform wird zur Herstellung des erfindungsgemäß verwendeten bevorzugt amorphen Polyurethanharnstoffs ≥ 0,1 und ≤ 10 Gew.-% der Komponente C2) und besonders bevorzugt ≥ 0,5 und ≤ 4 Gew.-% der Komponente C2), jeweils bezogen auf die Gesamtmasse des bevorzugt amorphen Polyurethanharnstoffs, eingesetzt.

Zur Hydrophilierung können auch Mischungen aus anionischen Hydrophilierungsmitteln C2) und weiteren Hydrophilierungsmitteln D), welche von C2) verschieden sind, verwendet werden.

Geeignete weitere Hydrophilierungsmittel D) sind beispielsweise nichtionische hydrophilierende Verbindungen D1) und/oder hydroxyfunktionelle ionische oder ionogene Hydrophilierungsmittel D2). In einer bevorzugten Ausführungsform des Klebstoffes handelt es sich bei der Komponente D) um nichtionisch hydrophilierende Komponenten D1). Bevorzugt ist die Komponente D) in der wässrigen Polyurethanharnstoff-Dispersion zur Bildung des erfindungsgemäßen Klebstoffes enthalten, wenn die Komponente C2) nicht vorhanden ist.

Geeignete hydroxyfunktionelle ionische oder ionogene Hydrophilierungsmittel als Komponente D2) sind beispielsweise Hydroxycarbonsäuren wie Mono- und Dihydroxycarbonsäuren, wie 2-Hydroxyessigsäure, 3-Hydroxypropansäure, 12-Hydroxy-9-octadecansäure (Rizinolsäure), Hydroxypivalinsäure, Milchsäure, Dimethylolbuttersäure und/oder Dimethylolpropionsäure oder Gemische von mindestens zwei hieraus. Bevorzugt sind Hydroxypivalinsäure, Milchsäure und/oder Dimethylolpropionsäure, besonders bevorzugt ist Dimethylolpropionsäure. Bevorzugt werden keine hydroxyfunktionellen ionischen oder ionogenen Hydrophilierungsmittel D2), insbesondere bevorzugt keine Hydrophilierungsmittel, die Carboxylat und Hydroxygruppen aufweisen, wie beispielsweise Dimethylolpropionsäure eingesetzt. Bevorzugt ist die Menge an hydroxyfunktionellen ionischen oder ionogenen Hydrophilierungsmittel D2) in einem Bereich von 0 bis 1 Gew.-%, oder bevorzugt in einem Bereich von 0,01 bis 0,5 Gew.-%, bezogen auf die Gesamtmasse des bevorzugt amorphen Polyurethanharnstoffs in dem bevorzugt amorphen Polyurethanharnstoff enthalten.

Geeignete nichtionisch hydrophilierende Verbindungen als Komponente D1) sind z.B. Polyoxyalkylenether, welche über isocyanatreaktive Gruppen, wie Hydroxy-, Amino- oder Thiolgruppen verfügen. Bevorzugt sind monohydroxyfunktionelle, im statistischen Mittel 5 bis 70, bevorzugt 7 bis 55 Ethylenoxideinheiten pro Molekül aufweisenden Polyalkylenoxidpolyetheralkohole, wie sie in an sich bekannter Weise durch Alkoxylierung geeigneter Startermoleküle zugänglich sind (z.B. in Ullmanns Encyclopädie der technischen Chemie, 4. Auflage, Band 19, Verlag Chemie, Weinheim S. 31-38). Diese sind entweder reine Polyethylenoxidether oder gemischte Polyalkylenoxidether, wobei sie mindestens 30 mol-%, bevorzugt mindestens 40 mol-% bezogen auf alle enthaltenen Alkylenoxideinheiten an Ethylenoxideinheiten enthalten.

Besonders bevorzugte nichtionische Verbindungen sind monofunktionelle gemischte Polyalkylenoxidpolyether, die 40 bis 100 mol-% Ethylenoxid- und 0 bis 60 mol-% Propylenoxideinheiten aufweisen.

Geeignete Startermoleküle für solche nichtionischen Hydrophilierungsmittel sind insbesondere gesättigte Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether, wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole der vorstehend genannten Art. Besonders bevorzugt werden Diethylenglykolmonobutylether, Methanol oder n-Butanol als Startermoleküle verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

In einer bevorzugten Ausführungsform der Erfindung enthält der erfindungsgemäß verwendete bevorzugt amorphen Polyurethanharnstoff ≥ 0 und ≤ 20 Gew.-% der Komponente D), bevorzugt ≥ 0,1 und ≤ 10 Gew.-% der Komponente D) und ganz besonders bevorzugt ≥ 1 und ≤ 5 Gew.-% der Komponente D), jeweils bezogen auf die Gesamtmasse des bevorzugt amorphen Polyurethanharnstoffs. In einer weiteren bevorzugten Ausführungsform wird Komponente D) zur Herstellung des bevorzugt amorphen Polyurethanharnstoffs nicht verwendet. In diesem Fall ist Komponente C2) zwingend in dem Polyurethanharnstoff enthalten.

Als Komponente E) können wahlweise Polyole, insbesondere nicht-polymere Polyole, des genannten Molekulargewichtsbereichs von 62 bis 399 mol/g mit bis zu 20 Kohlenstoffatomen, wie Ethylenglykol, Diethylenglykol, Triethylenglykol, 1,2-Propandiol, 1,3-Propandiol, 1,4-Butandiol, 1,3-Butylenglykol, Cyclohexandiol, 1,4-Cyclohexandimethanol, 1,6-Hexandiol, Neopentylglykol, Hydrochinondihydroxyethylether, Bisphenol A (2,2-Bis(4-hydroxyphenyl)propan), hydriertes Bisphenol A (2,2-Bis(4-hydroxycyclohexyl)propan), Trimethylolpropan, Trimethylolethan, Glycerin, Pentaerythrit sowie deren beliebige Mischungen untereinander eingesetzt werden.

In einer bevorzugten Ausführungsform der Erfindung enthält der erfindungsgemäß verwendete bevorzugt amorphen Polyurethanharnstoff ≤ 10 Gew.-% der Komponente E), bevorzugt ≤ 5 Gew.-% der Komponente E), jeweils bezogen auf die Gesamtmasse des bevorzugt amorphen Polyurethanharnstoffs. Bevorzugt beinhaltet der bevorzugt amorphen Polyurethanharnstoff die Komponente E) in einem Bereich von 0,1 bis 10 Gew.-%, bevorzugt in einem Bereich von 0,2 bis 8 Gew.-%, bevorzugt in einem Bereich von 0,1 bis 5 Gew.-%, bezogen jeweils auf die Gesamtmasse des bevorzugt amorphen Polyurethanharnstoffs. In einer weiteren bevorzugten Ausführungsform wird Komponente E) zur Herstellung des bevorzugt amorphen Polyurethanharnstoffs nicht verwendet.

In einer bevorzugten Ausführungsform wird zur Herstellung des erfindungsgemäß verwendeten bevorzugt amorphen Polyurethanharnstoffs ≥ 0,5 und ≤ 20 Gew.-% der Summe der Komponenten C1) und gegebenenfalls E) und besonders bevorzugt ≥ 1 und ≤ 15 Gew.-% der Summe der Komponenten C1) und gegebenenfalls E), jeweils bezogen auf die Gesamtmasse des bevorzugt amorphen Polyurethanharnstoffs, eingesetzt.

Als Komponente F) können weitere polymere Polyole, welche unterschiedlich sind von B) eingesetzt werden.

Beispiele sind polymere Polyole, die nicht unter die Definition von B) fallen, weil sie keine Polyetherpolyole sind - beispielsweise die in der Polyurethanlacktechnologie an sich bekannten Polyesterpolyole, Polyacrylatpolyole, Polyurethanpolyole, Polycarbonatpolyole, Polyesterpolyacrylatpolyole, Polyurethanpolyacrylatpolyole, Polyurethanpolyesterpolyole, Polyurethanpolycarbonatpolyole und Polyesterpolycarbonatpolyole.

Bevorzugt handelt es sich bei der Komponente F) nicht um polymere Polyole die Estergruppen aufweisen, insbesondere nicht um Polyesterpolyole.

Die Komponenten B) und F) enthalten erfindungsgemäß zusammen ≤ 30 Gew.-%, bevorzugt ≤ 10 Gew.-%, und besonders bevorzugt ≤ 5 Gew.-%, an Komponente F), bezogen auf die Gesamtmasse der Komponenten B) und F). Ganz besonders bevorzugt wird die Komponente F) zur Herstellung des bevorzugt amorphen Polyurethanharnstoffs nicht eingesetzt.

In einer bevorzugten Ausführungsform wird zur Herstellung des erfindungsgemäß verwendeten bevorzugt amorphen Polyurethanharnstoffs ≥ 55 und ≤ 90 Gew.-% der Summe der Komponenten B) und gegebenenfalls F) und besonders bevorzugt ≥ 60 und ≤ 85 Gew.-% der Summe der Komponenten B) und gegebenenfalls F), jeweils bezogen auf die Gesamtmasse des bevorzugt amorphen Polyurethanharnstoffs, eingesetzt.

Bei der Komponente G) handelt es sich bevorzugt um Verbindungen, die genau eine isocyanatreaktive Gruppe aufweisen, oder um Verbindungen, die mehr als eine isocyanatreaktive Gruppe aufweisen, wobei nur eine der isocyanatreaktiven Gruppen unter den gewählten Umsetzungsbedingungen mit den in der Reaktionsmischung vorhandenen Isocyanatgruppen reagiert.

Bei den isocyanatreaktiven Gruppen der Komponente G) kann es sich dabei um jede funktionelle Gruppe handeln, die mit einer Isocyanatgruppe reagieren kann, wie beispielsweise Hydroxygruppen, Thiolgruppen oder primäre und sekundäre Aminogruppen.

Isocyanatreaktive Gruppen im Sinne der Erfindung sind dabei insbesondere bevorzugt primären oder sekundäre Aminogruppen, die mit Isocyanatgruppen unter Bildung von Harnstoffgruppen reagieren. Neben der Aminogruppe können Verbindungen der Komponente G) auch andere prinzipiell isocyanatreaktive Gruppen wie beispielsweise auch OH-Gruppen aufweisen, wobei nur eine der isocyanatreaktiven Gruppen unter den gewählten Umsetzungsbedingungen mit den in der Reaktionsmischung vorhandenen Isocyanatgruppen reagiert. Dies kann beispielsweise durch Reaktion entsprechender Aminoalkohole bei relativ niedrigen Temperaturen erfolgen, beispielsweise bei 0 bis 60°C, bevorzugt bei 20 bis 40°C. Bevorzugt wird dabei in Abwesenheit von Katalysatoren gearbeitet, welche die Reaktion von Isocyanatgruppen mit Alkoholgruppen katalysieren würden.

Beispiele für geeignete Verbindungen der Komponente G) sind primäre/sekundäre Amine, wie Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl(methyl)aminopropylamin, Morpholin, Piperidin, Diethanolamin, 3-Amino-1-methylaminopropan, 3-Amino-1-ethylaminopropan, 3-Amino-1-cyclohexylaminopropan, 3-Amino-1- methylaminobutan, 6-Aminohexansäure, Alanin, Asparaginsäure, Glutaminsäure, Glutamin, Glycin, Ethanolamin, 3-Aminopropanol, Neopentanolamin oder Mischungen aus mindestens zwei hiervon.

Geeignete monofunktionellen Verbindungen sind auch Ethanol, n-Butanol, Ethylenglykolmonobutylether, Diethylenglykolmonomethylether, Diethylenglykolmonobutylether, Propylenglykolmonomethylether, Dipropylenglykol-monomethylether, Tripropylenglykolmonomethylether, Dipropylenglykolmono-propylether, Propylenglykolmonobutylether, Dipropylenglykolmonobutylether, Tripropylenglykolmonobutylether, 2-Ethylhexanol, 1-Octanol, 1-Dodecanol, 1-Hexadecanol.

In einer bevorzugten Ausführungsform wird zur Herstellung des erfindungsgemäß verwendeten bevorzugt amorphen Polyurethanharnstoffs ≥ 0,1 und ≤ 20 Gew.-% der Komponente G) und besonders bevorzugt ≥ 0,3 und ≤ 10 Gew.-% der Komponente G), jeweils bezogen auf die Gesamtmasse des bevorzugt amorphen Polyurethanharnstoffs, eingesetzt.

In einer besonders bevorzugten Ausführungsform der Erfindung wird die Komponente H) eingesetzt und das molare Verhältnis von Komponente G) zu Komponente H) beträgt bevorzugt 5:1 bis 1:5, besonders bevorzugt 1,5:1 bis 1:4 und ganz besonders bevorzugt 1:1 bis 1:3.

In einer bevorzugten Ausführungsform werden zur Herstellung der erfindungsgemäß verwendeten bevorzugt amorphen Polyurethanharnstoffe die Komponenten A) bis H) in den folgenden Mengen eingesetzt, wobei sich die Einzelmengen stets zu 100 Gew.-% addieren:
5 bis 40 Gew.-% Komponente A),
55 bis 90 Gew.-% Summe der Komponenten B) und gegebenenfalls F),
0,5 bis 20 Gew.-% Summe der Komponenten C1) und gegebenenfalls E),
0,1 bis 10 Gew.-% Komponente C2),
0 bis 20 Gew.-% Komponente D),
0,1 bis 20 Gew.-% der Komponente G) und
0 bis 10 Gew.-% Komponente H).

In einer besonders bevorzugten Ausführungsform werden zur Herstellung der erfindungsgemäß verwendeten bevorzugt amorphen Polyurethanharnstoffe die Komponenten A) bis H) in den folgenden Mengen eingesetzt, wobei sich die Einzelmengen stets zu 100 Gew.-% aufaddieren:
10 bis 35 Gew.-% Komponente A),
60 bis 85 Gew.-% Summe der Komponenten B) und gegebenenfalls F),
1 bis 15 Gew.-% Summe der Komponenten C1) und gegebenenfalls E),
0,5 bis 4 Gew.-% Komponente C2),
0 bis 10 Gew.-% Komponente D),
0,3 bis 10 Gew.-% der Komponente G) und
0,1 bis 3 Gew.-% Komponente H).

In einer bevorzugten Ausführungsform der Erfindung umfasst der bevorzugt amorphe Klebstoff einen bevorzugt amorphen Polyurethanharnstoff, der erhältlich ist, durch Umsetzung von mindestens
A) einer aliphatischen Polyisocyanat-Komponente mit einer mittleren Isocyanatfunktionalität von ≥ 1,8 und ≤ 2,6, welche ausgewählt ist aus HDI, IPDI und/oder H12-MDI oder deren Modifikationsprodukten,
B) einer polymeren Polyether-Polyol-Komponente, welche bevorzugt aus Poly(propylenglykol)polyetherpolyole besteht,
C) einer aminofunktionellen Kettenverlängerer-Komponente mit mindestens 2 isocyanatreaktiven primären und/oder sekundären Aminogruppen, enthaltend wenigstens eine aminofunktionelle Verbindung C1), die keine ionischen oder ionogenen Gruppen aufweist und/oder eine aminofunktionelle Verbindung C2), die ionische oder ionogene Gruppen aufweist,
D) gegebenenfalls weiteren hydrophilierenden Komponenten, die unterschiedlich sind von C2),
E) gegebenenfalls hydroxyfunktionellen Verbindungen mit einem Molekulargewicht von 62 bis 399 mol/g,
F) gegebenenfalls weiteren polymeren Polyolen, welche unterschiedlich sind von B),
G) gegebenenfalls einer Verbindung, die genau eine isocyanatreaktive Gruppe aufweist, oder einer Verbindung, die mehr als eine isocyanatreaktive Gruppe aufweist, wobei nur eine der isocyanatreaktiven Gruppen unter den gewählten Umsetzungsbedingungen mit den in der Reaktionsmischung vorhandenen Isocyanatgruppen reagiert und
H) gegebenenfalls einer aliphatischen Polyisocyanat-Komponente mit einer mittleren Isocyanatfunktionalität von > 2,6 und ≤ 4, wobei die Komponente H) aus einem aliphatischen oder cycloaliphatischen Polyisocyanat-Oligomer mit Isocyanurat-, Urethan-, Allophanat-, Biuret-, Iminooxadiazindion- oder Oxadiazintrionstruktur besteht,
wobei die Komponenten B) und F) zusammen ≤ 30 Gew.-% an Komponente F), bezogen auf die Gesamtmasse der Komponenten B) und F) enthalten.

In einer besonders bevorzugten Ausführungsform der Erfindung umfasst der bevorzugt amorphe Klebstoff einen bevorzugt amorphen Polyurethanharnstoff, der erhältlich ist, durch Umsetzung von mindestens
A) einer aliphatischen Polyisocyanat-Komponente, wobei es sich um ein Gemisch aus IPDI und HDI handelt,
B) einer polymeren Polyether-Polyol-Komponente, welche ein Gemisch aus wenigstens zwei Poly(propylenglykol)polyetherpolyole ist und wobei sich die Poly(propylenglykol)polyetherpolyole in ihren zahlenmittleren Molekulargewichten unterscheiden,
C) einer aminofunktionellen Kettenverlängerer-Komponente mit 2 isocyanatreaktiven primären und/oder sekundären Aminogruppen, enthaltend wenigstens eine aminofunktionelle Verbindung C1), die keine ionischen oder ionogenen Gruppen aufweist und/oder eine aminofunktionelle Verbindung C2), die ionische oder ionogene Gruppen aufweist,
D) gegebenenfalls weiteren hydrophilierenden Komponenten, die unterschiedlich sind von C2), wobei es sich um nichtionisch hydrophilierende Komponenten D1) handelt,
E) gegebenenfalls hydroxyfunktionellen Verbindungen mit einem Molekulargewicht von 62 bis 399 mol/g,
F) gegebenenfalls weitere polymere Polyole, welche unterschiedlich sind von B),
G) gegebenenfalls einer Verbindung, die genau eine isocyanatreaktive Gruppe aufweist, oder einer Verbindung, die mehr als eine isocyanatreaktive Gruppe aufweist, wobei nur eine der isocyanatreaktiven Gruppen unter den gewählten Umsetzungsbedingungen mit den in der Reaktionsmischung vorhandenen Isocyanatgruppen reagiert, wobei es sich bei der isocyanatreaktiven Gruppe um eine primäre und/oder sekundäre Amino- und/oder Hydroxygruppe handelt und
H) gegebenenfalls einer aliphatischen Polyisocyanat-Komponente mit einer mittleren Isocyanatfunktionalität von > 2,6 und ≤ 4, wobei die Komponente H) aus einem aliphatischen oder cycloaliphatischen Polyisocyanat-Oligomer mit Isocyanurat-, Urethan-, Allophanat-, Biuret-, Iminooxadiazindion- oder Oxadiazintrionstruktur, basierend auf HDI, IPDI und/oder H12-MDI besteht,
wobei die Komponenten B) und F) zusammen ≤ 30 Gew.-% an Komponente F), bezogen auf die Gesamtmasse der Komponenten B) und F) enthalten.

Bevorzugt ist der erfindungsgemäß verwendete bevorzugt amorphe Polyurethanharnstoff erhältlich durch Umsetzung ausschließlich der Komponenten A) bis H). Es werden dann keine weiteren Komponenten zur Herstellung des bevorzugt amorphen Polyurethanharnstoffs eingesetzt.

Die erfindungsgemäß verwendeten bevorzugt amorphen Polyurethanharnstoffe sind bevorzugt lineare Moleküle, können alternativ jedoch auch verzweigt sein.

Das zahlenmittlere Molekulargewicht der bevorzugt verwendeten bevorzugt amorphen Polyurethanharnstoffe beträgt bevorzugt von ≥ 2000 bis ≤ 300000 g/mol, bevorzugt von ≥ 5000 bis ≤ 150000 g/mol, oder bevorzugt von ≥10000 bis ≤ 100000 g/mol.

Der zur Herstellung des Klebstoffes eingesetzte bevorzugt amorphe Polyurethanharnstoff liegt bevorzugt in einem physiologisch akzeptablen Medium vor. Besonders bevorzugt handelt es sich bei dem Medium um Wasser und ganz besonders bevorzugt liegt der bevorzugt amorphen Polyurethanharnstoff als wässrige Dispersion vor, die im Wesentlichen keine weiteren Lösungsmittel aufweist. Unter im Wesentlichen keine weiteren Lösungsmittel wird gemäß der Erfindung verstanden, dass weniger als 2 Gew.-%, bevorzugt weniger als 1,5 Gew.-%, oder bevorzugt weniger als 1 Gew.-%, bezogen auf das Gesamtgewicht der Polyurethandispersion, keine weiteren Lösungsmittel in der Polyurethandispersion vorhanden sind, insbesondere keine organischen Lösungsmittel wie beispielsweise Aceton. Wasser bildet im Allgemeinen, neben wahlweise vorhandenen anderen flüssigen Medien, wie beispielsweise Lösungsmitteln, den Hauptbestandteil (> 50 Gew.-%) des Dispergiermediums, bezogen auf die Gesamtmenge des flüssigen Dispergiermediums, gegebenenfalls auch das alleinige flüssige Dispergiermedium. Bevorzugt ist der verwendete bevorzugt amorphen Polyurethanharnstoff daher in Wasser dispergierbar, was im Rahmen dieser Erfindung bedeutet, dass der bevorzugt amorphen Polyurethanharnstoff bei 23°C eine sedimentationsstabile Dispersion in Wasser, insbesondere entionisiertem Wasser, bilden kann.

In einer bevorzugten Ausführungsform des Klebstoffs sind die verwendeten bevorzugt amorphen Polyurethanharnstoffe erhältlich, indem isocyanatfunktionelle Polyurethanpräpolymere a) aus den Komponenten A), B) und gegebenenfalls D) und/oder C2), sowie gegebenenfalls den Verbindungen E) und/oder H) hergestellt werden (Schritt a) und deren freie NCO-Gruppen anschließend ganz oder teilweise mit der aminofunktionellen Kettenverlängerer-Komponente C), sowie der Komponente G) und gegebenenfalls der Komponente D) und H) umgesetzt werden (Schritt b)).

Wobei wenn die Komponente H) erst in Schritt b) eingesetzt wird, diese bevorzugt vor der Zugabe der Komponente C) zugegeben und mit dem Prepolymer a) umgesetzt wird.

In einer bevorzugten Ausführungsform der Erfindung erfolgt im Schritt b) die Umsetzung mit einem Diamin oder mehreren Diaminen (Komponente C) unter Kettenverlängerung wobei außerdem die monofunktionelle Komponente G) als Kettenabbrecher zur Molekulargewichtssteuerung zugesetzt wird.

Die Komponenten A) bis H) sind dabei wie oben angegeben definiert. Es gelten auch die oben genannten bevorzugten Ausführungsformen.

Bevorzugt wird im Schritt b) der Umsetzung des Präpolymers a) zur Herstellung des bevorzugt amorphen Polyurethanharnstoffs eine Mischung aus Komponenten C1), C2) und G) zur Umsetzung gebracht. Durch die Verwendung der Komponente C1) kann eine hohe Molmasse aufgebaut werden, ohne dass die Viskosität des zuvor hergestellten isocyanatfunktionellen Präpolymers in einem Maße ansteigt, welches einer Verarbeitung entgegenstehen würde. Durch die Verwendung der Kombination der Komponenten C1), C2) und G) lässt sich eine optimale Balance zwischen Hydrophilie und Kettenlänge einstellen.

Bevorzugt weist das erfindungsgemäß verwendete Polyurethanpräpolymer a) endständige Isocyanatgruppen auf, d.h. die Isocyanatgruppen liegen an den Kettenenden des Präpolymers. Besonders bevorzugt weisen sämtliche Kettenenden des Präpolymers Isocyanatgruppen auf.

Über die hydrophilierende Komponente C2) und/oder D) kann die Hydrophilie des Präpolymers gesteuert werden. Daneben spielen für die Hydrophilie des Präpolymers natürlich auch noch weitere Komponenten, speziell auch die Hydrophilie der Komponente B) eine Rolle.

Bevorzugt sind die isocyanatfunktionellen Polyurethanpräpolymere a) wasserunlöslich und nicht in Wasser dispergierbar.

Im Rahmen der Erfindung bedeutet der Begriff "wasserunlösliches, nicht wasserdispergierbares Polyurethanpräpolymer" insbesondere, dass die Wasserlöslichkeit des erfindungsgemäß verwendeten Präpolymers bei 23°C weniger als 10 g / Liter, bevorzugter weniger als 5 g / Liter beträgt und das Präpolymer bei 23° keine sedimentationsstabile Dispersion in Wasser, insbesondere entionisiertem Wasser, ergibt. Mit anderen Worten setzt sich das Präpolymer, beim Versuch es in Wasser zu dispergieren, ab. Die Wasserunlöslichkeit bzw. fehlende Dispergierbarkeit in Wasser bezieht sich auf entionisiertes Wasser ohne Zusatz von Tensiden.

Dabei sind die wasserunlöslichen, nicht wasserdispergierbaren, isocyanatfunktionellen Polyurethanpräpolymeren a) bevorzugt ausschließlich erhältlich aus den Komponenten A), B) und gegebenenfalls D), E) und/oder H).

Die Komponenten sind dabei wie oben angegeben definiert. Es gelten auch die oben genannten bevorzugten Ausführungsformen.

Die Hydrophilierungsmittel D) werden bevorzugt in solchen Mengen eingesetzt, dass das Präpolymer dennoch wasserunlöslich und nicht wasserdispergierbar ist. Besonders bevorzugt werden ≤ 10 Gew.-% der Komponente D), ganz besonders bevorzugt ≤ 5 Gew.-% und weiterhin bevorzugt ≤ 2 Gew.-% der Komponente D), jeweils bezogen auf die Gesamtmasse des bevorzugt amorphen Polyurethanharnstoffs, eingesetzt. Weiterhin bevorzugt wird die Komponente D) zur Herstellung des Präpolymers a) nicht eingesetzt.

In einer bevorzugten Ausführungsform der Erfindung weist die Komponente B) weder ionische noch ionogene Gruppen auf. Weiterhin werden bei dieser Ausführungsform der Erfindung als Komponente B) bevorzugt nur Polyetherpolyole, insbesondere Polyalkylenoxidether eingesetzt, die ≤ 10 mol-% und bezogen auf alle enthaltenen Alkylenoxideinheiten an Ethylenoxideinheiten und bevorzugt keine Ethylenoxideinheiten enthalten.

Die in dieser Ausführungsform der Erfindung bevorzugt verwendeten bevorzugt amorphen Polyurethanharnstoffe weisen folglich ionische oder ionogene Gruppen auf, bevorzugt anionische Gruppen auf, diese anionischen Gruppen werden dabei in die verwendeten bevorzugt amorphen Polyurethanharnstoffe über die in Schritt b) eingesetzte hydrophilierende Komponente C2) eingeführt. Die verwendeten bevorzugt amorphen Polyurethanharnstoffe weisen gegebenenfalls zusätzlich nichtionische Komponenten zu Hydrophilierung auf.

Besonders bevorzugt sind in den verwendeten bevorzugt amorphen Polyurethanharnstoffen zur Hydrophilierung ausschließlich Sulfonatgruppen enthalten, welche in Schritt b) über entsprechende Diamine als Komponente C2) in den bevorzugt amorphen Polyurethanharnstoff eingeführt werden.

In einer alternativen, weniger bevorzugten Ausführungsform der Erfindung sind die zur Herstellung des erfindungsgemäßen bevorzugt amorphen Polyurethanharnstoffs eingesetzten Präpolymere a) wasserlöslich oder wasserdispergierbar. In dieser Ausführungsform werden die hydrophilierende Komponente D) und/oder C2) bei der Herstellung des Präpolymers a) in einer Menge eingesetzt, die ausreichend ist, damit das Präpolymer wasserlöslich oder wasserdispergierbar ist. Das Präpolymer a) weist dabei bevorzugt ionische oder ionogene Gruppen auf.

Geeignete hydrophilierende Komponenten D) und C2) sind für diese Ausführungsform der Erfindung die oben für D) und C2) genannten Verbindungen. Bevorzugt werden als hydrophilierende Komponenten wenigstens die oben unter D1) und/oder C2) genannten Verbindungen eingesetzt.

Die zur Herstellung des erfindungsgemäßen Klebstoffes verwendeten bevorzugt amorphen Polyurethanharnstoffe werden bevorzugt vor, während oder nach Schritt b), besonders bevorzugt während oder nach Schritt b) in Wasser dispergiert. So wird eine Dispersion der bevorzugt amorphen Polyurethanharnstoffe erhalten.

Die Herstellung der bevorzugt amorphen Polyurethanharnstoff-Dispersionen kann dabei in einer oder mehreren Stufe/-n in homogener oder bei mehrstufiger Umsetzung, teilweise in disperser Phase durchgeführt werden. Nach Herstellung des Präpolymers a) erfolgt bevorzugt ein Dispergier-, Emulgier- oder Lösungsschritt. Im Anschluss erfolgt gegebenenfalls eine weitere Polyaddition oder Modifikation in disperser Phase. Dabei wird jeweils das für das entsprechende Präpolymer geeignete Löse- oder Dispergiermittel wie beispielsweise Wasser oder Aceton oder Mischungen daraus gewählt.

Dabei können alle aus dem Stand der Technik bekannten Verfahren wie z. B. Präpolymer-Mischverfahren, Acetonverfahren oder Schmelzdispergierverfahren verwendet werden. Bevorzugt wird das Aceton-Verfahren angewandt.

Für die Herstellung nach dem Aceton-Verfahren werden üblicherweise die Bestandteile B), gegebenenfalls D) und E) und die Polyisocyanatkomponente A) gegebenenfalls in Kombination mit der Komponente H) zur Herstellung eines isocyanatfunktionellen Polyurethanpräpolymers ganz oder teilweise vorgelegt und gegebenenfalls mit einem mit Wasser mischbaren aber gegenüber Isocyanatgruppen inerten Lösungsmittel verdünnt und auf Temperaturen im Bereich von 50 bis 120°C aufgeheizt. Zur Beschleunigung der Isocyanatadditionsreaktion können die in der Polyurethan-Chemie bekannten Katalysatoren eingesetzt werden.

Geeignete Lösungsmittel sind die üblichen aliphatischen, ketofunktionellen Lösemittel wie Aceton, 2-Butanon, die nicht nur zu Beginn der Herstellung, sondern gegebenenfalls in Teilen auch später zugegeben werden können. Bevorzugt sind Aceton und 2-Butanon, besonders bevorzugt ist Aceton. Auch die Zugabe anderer Lösemittel ohne isocyanatreaktive Gruppen ist möglich, jedoch nicht bevorzugt.

Anschließend können die gegebenenfalls zu Beginn der Reaktion noch nicht zugegebenen Bestandteile von A), B) und gegebenenfalls H), D) und E) zudosiert werden.

Bei der Herstellung des Polyurethan-Präpolymeren aus A), B) und gegebenenfalls H), D) und E) beträgt das Stoffmengenverhältnis von Isocyanat-Gruppen zu isocyanatreaktiven Gruppen bevorzugt 1,05 bis 3,5, besonders bevorzugt 1,1 bis 3,0 und ganz besonders bevorzugt 1,1 bis 2,5.

Die Umsetzung der Komponenten A), B) und gegebenenfalls H), D) und E) zum Präpolymer kann teilweise oder vollständig, bevorzugt aber vollständig erfolgen. Es können so Polyurethanpräpolymere, die freie Isocyanatgruppen enthalten, in Substanz oder in Lösung erhalten werden.

Sollten ionogene Gruppen, wie beispielsweise Carboxylgruppen, im Präpolymer vorliegen können diese in einem weiteren Schritt durch Neutralisation in ionische Gruppen überführt werden. Dies ist jedoch nicht bevorzugt.

Im Neutralisationsschritt zur teilweisen oder vollständigen Überführung potentiell anionischer Gruppen in anionische Gruppen können Basen wie tertiäre Amine, z.B. Trialkylamine mit 1 bis 12, bevorzugt 1 bis 6 C-Atomen, besonders bevorzugt 2 bis 3 C-Atomen in jedem Alkylrest oder ganz besonders bevorzugt Alkalimetallbasen wie die entsprechenden Hydroxide eingesetzt werden.

Als Neutralisationsmittel sind bevorzugt anorganische Basen, wie wässrige Ammoniaklösung oder Natrium- bzw. Kaliumhydroxid einsetzbar, besonders bevorzugt sind Natriumhydroxid und Kaliumhydroxid.

Die Stoffmenge der Basen beträgt bevorzugt 50 und 125 mol%, besonders bevorzugt zwischen 70 und 100 mol% der Stoffmenge der zu neutralisierenden Säuregruppen. Die Neutralisation kann, auch gleichzeitig mit der Dispergierung erfolgen, in dem das Dispergierwasser bereits das Neutralisationsmittel enthält.

Im Anschluss an die Neutralisation wird in einem weiteren Verfahrensschritt, falls noch nicht oder nur teilweise geschehen, das erhaltene Präpolymer mit Hilfe von aliphatischen Ketonen wie Aceton oder 2-Butanon gelöst.

Bei der Kettenverlängerung/-terminierung in Stufe b) werden die Komponenten C), G) und gegebenenfalls D) mit den noch verbliebenen Isocyanatgruppen des Präpolymers umgesetzt. Bevorzugt wird die Kettenverlängerung/-terminierung vor der Dispergierung in Wasser durchgeführt.

Geeignete Komponenten C) zur Kettenverlängerung sowie G) zum Kettenabbruch sind bereits oben aufgeführt. Es gelten analog auch die oben genannten bevorzugten Ausführungsformen.

Werden zur Kettenverlängerung anionische Hydrophilierungsmittel entsprechend der Definition C2) mit NH₂- oder NH-Gruppen eingesetzt, erfolgt die Kettenverlängerung der Präpolymere in Schritt b) bevorzugt vor der Dispergierung in Wasser.

Das Äquivalentverhältnis von NCO-reaktiven Gruppen der zur Kettenverlängerung und Kettenterminierung eingesetzten Verbindungen zu freien NCO-Gruppen des Präpolymers, liegt im allgemeinen zwischen 40 und 150 %, bevorzugt zwischen 50 und 110 %, besonders bevorzugt zwischen 60 und 100 %.

Die Komponenten C1), C2) und G), können gegebenenfalls in wasser- oder lösemittelverdünnter Form im erfindungsgemäßen Verfahren einzeln oder in Mischungen eingesetzt werden, wobei grundsätzlich jede Reihenfolge der Zugabe möglich ist.

Wenn Wasser oder organische Lösemittel als Verdünnungsmittel in Schritt b) mit verwendet werden, so beträgt der jeweilige Verdünnungsmittelgehalt in den eingesetzten Komponenten C1), C2) und G) bevorzugt 40 bis 95 Gew.-%.

Die Dispergierung erfolgt bevorzugt im Anschluss an die Kettenverlängerung und Kettenterminierung. Dazu wird das gelöste (beispielsweise in Aceton) und mit dem Aminen umgesetzte Polyurethanpolymer gegebenenfalls unter starker Scherung, wie z.B. starkem Rühren, entweder in das Dispergierwasser eingetragen oder es wird umgekehrt das Dispergierwasser zu den kettenverlängerte Polyurethanpolymerlösungen gerührt. Bevorzugt wird das Wasser in das gelöste Polyurethanpolymer gegeben.

Das in den Dispersionen nach dem Dispergierschritt noch enthaltene Lösemittel wird üblicherweise anschließend durch Destillation entfernt. Eine Entfernung bereits während der Dispergierung ist ebenfalls möglich.

Die erhaltenen wässrigen Polyurethanharnstoffdispersionen weisen bevorzugt einen Gehalt an flüchtigen organischen Verbindungen (VOC), wie beispielsweise flüchtige organische Lösemitteln, von weniger als 10 Gew.-%, bevorzugter von weniger als 3 Gew.-%, noch bevorzugter von weniger als 1 Gew.-% bezogen auf die auf wässrige Polyurethanharnstoffdispersion auf. VOCs im Sinne dieser Erfindung sind insbesondere organische Verbindung mit einem Anfangssiedepunkt von höchstens 250 °C bei einem Standarddruck von 101,3 kPa.

Die Bestimmung des Gehalts an flüchtigen organischen Verbindungen (VOC) erfolgt im Rahmen der vorliegenden Erfindung insbesondere durch gaschromatographische Analyse.

Der pH-Wert der verwendeten wässrigen Polyurethan-Dispersionen beträgt typischerweise weniger als 8,0, bevorzugt weniger als 7,5 und liegt besonders bevorzugt zwischen 5,5 und 7,5.

Um eine gute Sedimentationsstabilität zu erreichen, liegt die zahlenmittlere Teilchengröße der speziellen Polyurethanharnstoff-Dispersionen bevorzugt bei weniger als 750 nm, besonders bevorzugt bei weniger als 500 nm, bestimmt mittels Laserkorrelations-Spektroskopie nach Verdünnung mit entionisiertem Wasser (Gerät: Malvern Zetasizer 1000, Malvern Inst. Limited).

Der Feststoffgehalt der Polyurethanharnstoff-Dispersionen beträgt bevorzugt 10 bis 70 Gew.-%, besonders bevorzugt 20 bis 60 Gew.-%und ganz besonders bevorzugt 40 bis 60 Gew.-%. Die Feststoffgehalte werden ermittelt durch Erhitzen einer ausgewogenen Probe auf 125°C bis zur Gewichtskonstanz. Bei Gewichtskonstanz wird durch erneutes Auswiegen der Probe der Festkörpergehalt berechnet.

Bevorzugt weisen diese Polyurethanharnstoff-Dispersionen weniger als 5 Gew.-%, besonders bevorzugt weniger als 0,2 Gew.-%, bezogen auf die Masse der Dispersionen, an ungebundenen organischen Aminen auf.

Die zur Herstellung des Klebstoffs eingesetzte Polyurethanharnstoff-Dispersionen weisen bei 23°C bei einer konstanten Scherrate von 10 s⁻¹ bevorzugt eine Viskosität von ≥ 1 und ≤ 10000 mPa s, besonders bevorzugt von ≥ 10 und ≤ 5000 mPa s und ganz besonders bevorzugt von ≥ 100 und ≤ 4000 mPa s auf. Die Viskosität wird dabei wie im Methodenteil beschrieben bestimmt.

Der für die Herstellung des Klebstoffs verwendete Polyurethanharnstoff ist bevorzugt amorph. In einer bevorzugten Ausführungsform des Klebstoffs weist der verwendete Polyurethanharnstoff einen T_{g} von ≤ - 25 °C, oder bevorzugt von ≤ - 50 °C, oder bevorzugt von ≤ - 70 °C auf.

Amorph bedeutet im Sinne dieser Erfindung, dass der Polyurethanharnstoff im in der im folgenden ausgeführten Messmethode genannten Temperaturbereich keine oder nur so geringe kristalline Anteile ausbildet, dass mittels der beschriebenen DSC Messungen nur ein oder mehrere Glasübergangspunkte Tg, aber keine Schmelzbereiche mit einer Schmelzenthalpie ≥ 20 J/g in dem genannten Temperaturbereich gefunden werden können.

Die Glasübergangstemperatur T_{g} wird im Rahmen dieser Erfindung mittels dynamischer Differenzkalorimetrie in Anlehnung an die DIN EN 61006, Verfahren A, bestimmt, wobei ein DSC Gerät verwendet wird, das zur Bestimmung von T_{g} mit Indium und Blei kalibriert ist und wobei drei unmittelbar aufeinander folgende Durchläufe von Aufheizungen von -100°C bis +150°C, mit einer Heizrate von 20 K/min, mit jeweils anschließender Abkühlung mit einer Kühlrate von 320 K/min vorgenommen und die dritte Aufheizkurve zur Bestimmung der Werte verwendet wird und wobei als T_{g} die Temperatur bei der halben Höhe einer Glasübergangsstufe bestimmt wird.

Sollte der Polyurethanharnstoff in Form einer Dispersion vorliegen, wird bei der Probenpräparation für die DSC Messungen besonders vorgegangen. Bei der Bestimmung der Glasübergangstemperatur T_{g} von Dispersionen mittels DSC kann die T_{g} des Polymers durch die kalorischen Effekte des Dispergens (Wasser, Neutralisationsmittel, Emulgatoren, Colöser, etc.) maskiert bzw. wegen der Mischbarkeit mit dem Polymer deutlich abgesenkt werden. Daher wird das Dispergens vor der DSC-Messung bevorzugt durch geeignete Trocknung zunächst vollständig entfernt, denn auch geringe Restmengen Dispergens wirken als Weichmacher und können die Glastemperatur dadurch absenken. Die Dispersion wird daher bevorzugt mit 200 µm Nassschichtdicke (NSD) mit einem Kastenrakel aus Edelstahl auf eine Glasplatte gerakelt, abgelüftet und dann für zwei Tage in einer Trockenbox bei RT und 0% relativer Luftfeuchtigkeit (rF) schonend getrocknet. Nach dieser Probenpräparation kann in der ersten Aufheizung der DSC Messung noch ein breiter endothermer Verdampfungsbereich von Restfeuchte im Filmauftreten. Um die bestimmten Werte möglichst von solchen Einflüssen frei zu erhalten, wird daher die dritte Aufheizkurve ausgewertet.

Weiterhin beinhaltet die wässrige Polyurethanharnstoff-Dispersion zur Herstellung des erfindungsgemäßen Klebstoffes eine Polycarbodiimid-Komponente (V2). Bei der Polycarbodiimid-Komponent (V2), handelt es sich bevorzugt um wasserlösliche oder wasserdispergierbare Verbindungen.

Das Polycarbodiimid der Polycarbodiimid-Komponente (V2), das in der erfindungsgemäßen Zusammensetzung enthalten ist hat bevorzugt ein Molekulargewicht Mw (bestimmt mittels GPC) in einem Bereich von 300 bis 500 000 g/mol, oder bevorzugt in einem Bereich von 500 bis 300 000 g/mol, oder bevorzugt in einem Bereich von 1000 bis 200 000 g/mol.

Allgemein betrachtet sind Carbodiimidgruppen in einfacher Weise aus zwei Isocyanatgruppen unter Abspaltung von Kohlendioxid erhältlich:

R-N=C=O + O=C=N-R → R-N=C=N-R + CO₂

Ausgehend von Diisocyanaten sind so oligomere Verbindungen mit mehreren Carbodiimidgruppen und gegebenenfalls Isocyanatgruppen, insbesondere endständigen Isocyanatgruppen, erhältlich, sogenannte Polycarbodiimide. Die noch vorhandenen Isocyanatgruppen können z.B. mit Alkoholen, Thiolen, primären oder sekundären Aminen unter Bildung von Urethan, Thiourethan oder Harnstoffgruppen weiter umgesetzt werden. Die Polycarbodiimide können daher neben freien Isocyanatgruppen auch deren vorstehend genannten Umsetzungsprodukte enthalten.

Bevorzugt zur Herstellung der Polycarbodiimid-Komponente ist ein Verfahren zur Herstellung von wässrigen Dispersionen von Polycarbodiimid, wobei in wenigstens einem Schritt wenigstens ein aliphatisches oder cycloaliphatisches Polyisocyanat bei einer Temperatur im Bereich von 160 bis 230 °C in Gegenwart von 50 bis 3000 ppm (ppm = part per million, 1 ppm = 0.0001%, molare Anteile) Carbodiimidisierungskatalysator bezogen auf die molare Menge an Polyisocyanat zu einem Polycarbodiimid mit einer mittleren Funktionalität von 1 bis 10 Carbodiimideinheiten umgesetzt wird, wobei die Reaktionsgase zeitweise oder permanent gezielt aus dem Reaktionsmedium abgeführt werden.

Bevorzugt wird ein aliphatisches bzw. cycloaliphatisches Polyisocyanat aus der Gruppe beste-hend aus Methylendiisocyanat, Dimethylendiisocyanat, Trimethylendiisocyanat, Tetramethylendiisocyanat, Pentamethylendiisocyanat, Dipropyletherdiisocyanat, 2,2-Dimethylpentandiisocyanat, 3-Methoxyhexandiisocyanat, Octamethylendiisocyanat, 2,2,4-Trimethylpentandiisocyanat, Nonamethylendiisocyanat, Decamethylen-diisocyanat, 3-Butoxyhexandiisocyanat, 1,4-Butylenglykoldipropyletherdiisocyanat, Thiodihexyldiisocyanat, Metaxylylendiisocyanat, Paraxylylendiisocyanat, Tetramethylxylylendiisocyanat, 4,4'-Dicyclohexylmethandiisocyanat (H12MDI), Isophorondiisocyanat (IPDI), Hexamethylendiiso-cyanat (HDI), hydriertes Xylylendiisocyanat (H6XDI), 1,12-Diisocyanatdodecan (DDI), Nor-bornandiisocyanat (NBDI) und 2,4-Bis(8-isocyanatoctyl)-1,3-dioctylcyclobutan (OCDI) ausgewählt.

Besonders bevorzugt sind Isophorondiisocyanat (IPDI), Hexamethylendiisocyanat (HDI), hy-driertes Xylylendiisocyanat (H6XDI), 4,4'-Dicyclohexylmethandiisocyanat (H12MDI). Ganz besonders bevorzugt ist das cycloaliphatische Polyisocyanat 4,4'-Dicyclohexylmethandiisocyanat (H12MDI).

Bevorzugt ist der Carbodiimidisierungskatalysator eine Organophosphorverbindung, besonders bevorzugt Organophosphorverbindungen ausgewählt aus der Gruppe bestehend aus Phos-phanoxid, Phospholanoxid und Phospholenoxid, sowie deren Sulfo- und Iminoanaloga. Die Phosphan-, Phospholen- und Phospholan-Oxide, -Sulfide sowie -Iminoderivate können unter anderem aus entsprechenden Vorgängern mit dreiwertigem Phosphor wie Phosphanen, Phospholanen und Phospholenen in situ generiert werden.

Bevorzugt wird das Phospholenoxid aus der Gruppe bestehend aus 3-Methyl-1-phenyl-2-phospholen-1-oxid, 3-Methyl-1-ethyl-2-phospholen-1-oxid, 1,3-Dimethyl-2-phospholen-1-oxid, 1-Phenyl-2-phospholen-1-oxid, 1-Ethyl-2-phospholen-1-oxid, 1-Methyl-2-phospholen-1-oxid ausgewählt.

Ebenfalls geeignete Carbodiimidisierungskatalysatoren können ausgewählt werden aus der Gruppe bestehend aus 1-Butyl-2-phospholen-1-oxid, 1-(2-Ethylhexyl)-2-phospholen-1-oxid, 1-Methyl-2-phospholen-1-sulfid, 1-(2-Chloroethyl)-2-phospholen-1-oxid, 1-p-Tolyl-2-phospholen-1-oxid, 1-1-Chloromethyl-2-phospholen-1 -oxid, 1,2-Dimethyl-2-phospholen-1-oxid, 1-Methyl-3-Chloro-2-phospholen-1-oxid, 1-Methyl-3-Bromo-2-phospholen-1-oxid, 1-Chlorophenyl-2-phospholen-1-oxid, 1,3,4-Trimethyl-2-phospholenoxid, 1,2,4-Trimethyl-2-phospholen-1-oxid, 1,2,2-Trimethyl-2-phospholen-1-oxid, 1-Phenyl-2-phospholen-1-sulfid, und 1-Phenyl-2,3-dimethyl-2-phospholen-1-oxid. Die vorgenannten Phospholenderivate können auch als 3-Phospholenisomere in der reinen Form oder als Isomerengemische mit den 2-Phopsholenisomeren vorliegen.

Ebenfalls geeignete Carbodiimidisierungskatalysatoren können auch ausgewählt werden aus der Gruppe bestehend aus Diphenylphosphinsäure und ihre Salze, Bis-(2,4,4,-trimethylpentyl)-phosphinsäure, Tributylphosphan, Triisobutylphosphansulfid, Trialkylphosphanoxide, wie Trioctylphosphanoxid oder Trihexylphosphanoxid, Triphenylphosphan, Tetraphenylphosphinbromid, Tetrabutylphosphinchlorid, Tetrabutylphosphinbromid, Bis-(2,4,4-trimethylpentyl)-dithiophosphonsäure und Bis-(2,4,4-trimethylpentyl)-monothiophosphonsäure.

Die Umsetzung von Polyisocyanat zu Polycarbodiimid erfolgt in Gegenwart von von 50 bis 3000 ppm, bevorzugt von 100 bis 2000 ppm, besonders bevorzugt in Gegenwart von 150 bis 1000 ppm, ganz besonders bevorzugt in Gegenwart von 200 bis 700 ppm Carbodiimidisierungskatalysator bezogen auf die molare Menge an Polyisocyanat.

Die Umsetzung von Polyisocyanat zu Polycarbodiimid erfolgt bei einer Temperatur im Bereich von 160 bis 230 °C, bevorzugt im Bereich von 180 °C bis 210 °C, besonders bevorzugt im Bereich von 185 °C bis 205 °C.

Bevorzugt ist ein Verfahren zur Herstellung von wässrigen Dispersionen von Polycarbodiimid, umfassend die Schritte
a) Umsetzen von wenigstens einem aliphatischem oder cycloaliphatischem Polyisocyanat bei einer Temperatur im Bereich von 160 bis 230 °C in Gegenwart von 50 bis 3000 ppm Carbodiimidisierungskatalysator bezogen auf die molare Menge an Polyisocyanat zu einem Polycarbodiimid mit einer mittleren Funktionalität von 1 bis 10 Carbodiimideinheiten umgesetzt wird, wobei die Reaktionsgase zeitweise oder permanent gezielt aus dem Reaktionsmedium abgeführt werden,
b) Umsetzen des in Schritt a) erhaltenen Polycarbodiimids mit wenigstens einer hydrophilen Verbindung, die mindestens gegenüber Isocyanat- und/oder Carbodiimidgruppen reaktionsfähige Gruppe trägt, zum Beispiel aber nicht darauf beschränkt, ausgewählt aus der Gruppe bestehend aus Polyethoxymonoolen, Polyethoxydiolen, Polyethoxypolypropoxymonoolen, Polyethoxypolypropoxydiolen, Polyethoxymonoaminen, Polyethoxydiaminen, Polyethoxypolypropoxymonoaminen, Polyethoxypolypropoxydiaminen, Hydroxyalkylsulfonaten, Aminalkylsulfonaten, Polyethoxymono- und -dithiolen, Polyethoxymono- und -dicarbonsäuren, Mono- und Dihydroxycarbonsäuren bzw. deren Salzen zu einem hydrophilierten Carbodiimid,
gegebenenfalls weiteres Umsetzen der nicht abreagierten Isocyanatgruppen mit weiteren gegenüber Isocyanatgruppen reaktionsfähigen Verbindungen, wie zum Beispiel mit Wasser, Alkoholen, Thiolen, Aminen, Mineral- und Carbonsäuren und
c) Dispergieren der in Schritt b) erhaltenen Verbindung in Wasser.

Bevorzugt erfolgt die Umsetzung des in Schritt a) erhaltenen, Isocyanat-Gruppen enthaltenden Polycarbodiimids gemäß der vorliegenden Erfindung so, dass 10 bis 70 Molprozent (mol.-%) der im Polycarbodiimid vorhandenen Isocyanat-Gruppen mit mindestens einer hydrophilen Verbindung als Teilschritt b1) des Schritts b) umgesetzt werden, wobei die hydrophile Verbindung ausgewählt ist aus der Gruppe bestehend aus Polyethoxymonoolen, Polyethoxydiolen, Polyethoxypolypropoxymonoolen, Polyethoxypolypropoxydiolen, Polyethoxymono-aminen, Polyethoxydiaminen, Polyethoxypolypropoxymonoaminen, Polyethoxypoly-propoxydiaminen, Hydroxyalkylsulfonaten, Aminalkylsulfonaten, Polyethoxymono- und -dithiolen, Polyethoxymono- und -dicarbonsäuren. Im Teilschritt b2) des Schritts b) werden 30-90 mol.-% der verbleibenden Isocyanat-Gruppen dann mit mindestens einer gegenüber Isocyanatgruppen reaktionsfähigen Verbindung umgesetzt, zum Beispiel, Polyethoxymonoolen, Polyethoxydiolen, Polyethoxypolypropoxymonoolen, Polyethoxypolypropoxydiolen, Polyethoxymonoaminen, Polyethoxydiaminen, Polyethoxypolypropoxymonoaminen, Polyethoxypolypropoxydiaminen, Hydroxyalkylsulfonaten, Aminalkylsulfonaten, Polyethoxymono- und -dithiolen, Polyethoxymono- und -dicarbonsäuren, Wasser, C1 bis C30 Alkoholen, C1 bis C30 Thiolen, Aminen, Mineral- und Carbonsäuren.

Bevorzugt erfolgt die Umsetzung der Polycarbodiimide in Teilschritt b1) des Schritts b) mit wenigstens einer Verbindung ausgewählt aus der Gruppe der Verbindungen entsprechend Formel I:

R¹-O-(CH₂-CH₂-O)ₘ-H Formel I

R¹ = C1 bis C30 Alkyl, Aryl oder Acylgruppe
m = 4 bis 60
besonders bevorzugt mit wenigstens einer Verbindung ausgewählt aus der Gruppe entsprechend der Formel I, wobei R¹ eine Methylgruppe ist und m = 10 bis 30. Ganz besonders bevorzugt ist Monomethoxypolyethylenglykol mit m = 15 bis 20.

Bevorzugte C1 bis C30 Alkohole, die zu einer Weiterreaktion der im Polycarbodiimid vorhandenen und mit den hydrophilen Verbindungen nicht vollständig umgesetzten Isocyanatgruppen in Teilschritt b2) des Schritts b) verwendet werden können, sind zum einen Wasser, niedermolekulare Monoalkohole oder auch Diole mit einem Molekulargewicht bevorzugt von 32 bis 500, besonders bevorzugt von 62 bis 300 g/mol. Ganz besonders bevorzugt werden kurzkettige Monoalkohole also verzweigte oder unverzweigte Monoalkohole mit 1 bis 30 C-Atomen wie Methanol, Ethanol, Propanol, 1-Butanol, 1-Pentanol, 1-Hexanol, Cyclohexanol, Cyclohexylmethanol, 2-Ethylhexanol, Dodecanol, Stearylalkohol oder Oleylalkohol, deren Gemische untereinander und Gemische deren Isomere sowie kurzkettige Dialkohole mit 2 bis 60 C-Atomen wie 1,4-Butandiol, 1,5-Pentandiol, 1,6-Hexandiol, Cyclohexandiol, Cyclohexandimethanol, 1,8-Octandiol, 1,9-Nonadiol, 1,10-Decandiol, 1,11-Undecandiol, 1,12-Dodecandiol, 1,13-Tridecandiol, Tricyclodecandimethanol, deren Gemisch untereinander sowie Gemische deren Isomere verwendet.

Die Reihenfolge der Teilschritte b1) und b2) des Schritts b) kann so festgelegt sein, dass Teilschritt b1) vor Teilschritt b2), beide gleichzeitig oder in der umgekehrten Reihenfolge erfolgen kann.

Die Umsetzung in Schritt b) erfolgt bei einer Temperatur im Bereich von 50 bis 200 °C, bevorzugt von 100 bis 170°C und besonders bevorzugt im Bereich von 120 bis 150 °C. Erfolgt die Bildung des hydrophilierten Polycarbodiimids sehr langsam, so ist die Verwendung eines herkömmlichen Urethanisierungs-Katalysators möglich.

Optional wird die wässrige Dispersion von hydrophiliertem Polycarbodiimid in einem Schritt d) auf einen pH-Wert im Bereich von 7 bis 12 (bei 23°C), besonders bevorzugt im Bereich von 8 bis 11, eingestellt. Dafür können Aminlösungen, Laugen und herkömmliche Pufferlösungen verwendet werden. Der pH-Wert kann in Schritt d) durch Zugabe einer Base ausgewählt aus der Gruppe bestehend aus Alkalihydroxiden, Ammoniak und tertiären Aminen eingestellt werden. Als Alkalihydroxide seien beispielhaft Lithiumhydroxid, Natriumhydroxid und Kaliumhydroxid genannt. Als tertiäres Amin seien beispielhaft ein Trialkylamin wie Triethylamin und Ethanolamine genannt. In einer alternativen Ausführungsform kann ein Puffer ausgewählt aus der Gruppe bestehend aus Phosphatpuffern, Tris(hydroxymethyl)-aminomethan-Puffern und Aminoalkylsulfonsäure-Puffern zur Einstellung des pH-Wertes verwendet werden.

Bevorzugte Verbindungen der Polycarbodiimid-Komponente sind solche der allgemeinen Formel II, 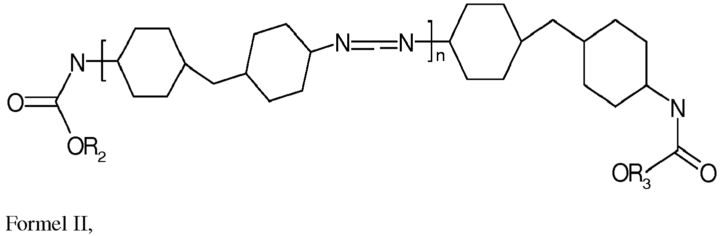 worin R² und R³, unabhängig voneinander, für einen von einer Verbindung ausgewählt aus der Gruppe bestehend aus einem Monoalkoxy-poly(ethylenglykol) gemäß der allgemeinen Formel I mit m = 4 bis 60, und einem von C1 bis C30 Alkohol oder einem C5 bis C90 Monoalkoxyethylenglykol abgeleiteten Rest stehen. Bevorzugte Verbindungen der allgemeinen Formell II tragen unabhängig voneinander R² und R³ Reste abgeleitet von Monomethoxypoly(ethylenglykol) gemäß der allgemeinen Formel I mit n = 10-20 und C1 bis C30 Monoalkoxyethylenglykol. Die besonders bevorzugte Verbindung der allgemeinen Formel II trägt unabhängig voneinander R² und R³ Reste abgeleitet von Monomethoxypoly(ethylenglykol) gemäß der allgemeinen Formel I mit n = 10-17 und Monobutoxyethylenglykol.

Die wässrigen Polycarbodiimid-Dispersionen und/oder Lösungen, hergestellt nach erfindungsgemäßen Verfahren, haben üblicherweise einen Feststoffgehalt von 10 bis 80 Gew.%, bevorzugt von 20 bis 60 Gew.-% und besonders bevorzugt von 30 bis 50 Gew.%.

Die mittlere Teilchengröße d50-Wert der in Wasser dispergierten Polycarbodiimidpartikel liegt üblicherweise im Bereich von 5 - 500 nm, bevorzugt von 15 bis 200 nm, besonders bevorzugt von 25 bis 100 nm. Die mittlere Teilchengröße d50 ist der Durchmesser, oberhalb und unterhalb dessen jeweils 50 Gew.-% der Teilchen liegen. Er kann mittels Ultrazentrifugenmessung (W. Scholtan, H. Lange, Kolloid. Z. und Z. Polymere 250 (1972), 782-796) bestimmt werden. Die mittleren Teilchengrößen und Teilchengrössenverteilungen können auch über Lichtstreumethoden bestimmt werden, die allerdings weniger präzise sind, jedoch mit den Ultrazentrifugationsmessungen recht gut korrelieren können, sofern keine polymodalen oder sehr breiten Teilchengrößenverteilungen vorliegen.

Typische weitere geeignete Zuschlags- und Hilfsstoffe L) sind Oberflächenadditive wie z.B. Benetzungshilfsmittel, Farbstoffe und/oder Verlaufshilfsmittel.

Die Polyurethanharnstoff-Dispersion kann auch alle weiteren dem Fachmann für die jeweilige Anwendung bekannten Zuschlagstoffe enthalten.

Ein weiterer Gegenstand der Erfindung betrifft eine wässrige Polyurethanharnstoff-Dispersion, enthaltend
(V1) einen amorphen Polyurethanharnstoff, welcher erhältlich ist, durch Umsetzung von mindstens
   A) einer aliphatischen Polyisocyanat-Komponente mit einer mittleren Isocyanatfunktionalität von ≥ 1,8 und ≤ 2,6,
   B) einer polymeren Polyether-Polyol-Komponente,
   C) einer aminofunktionellen Kettenverlängerer-Komponente mit mindestens 2 isocyanatreaktiven Aminogruppen, enthaltend wenigstens eine aminofunktionelle Verbindung C1), die keine ionischen oder ionogenen Gruppen aufweist und/oder eine aminofunktionelle Verbindung C2), die ionische oder ionogene Gruppen aufweist,
   D) gegebenenfalls weiteren hydrophilierenden Komponenten, die unterschiedlich sind von C2),
   E) gegebenenfalls hydroxyfunktionellen Verbindungen mit einem Molekulargewicht von 62 bis 399 mol/g,
   F) gegebenenfalls weitere polymere Polyolen, welche unterschiedlich sind von B)
   G) gegebenenfalls einer Verbindung, die genau eine isocyanatreaktive Gruppe aufweist, oder einer Verbindung, die mehr als eine isocyanatreaktive Gruppe aufweist, wobei nur eine der isocyanatreaktiven Gruppen unter den gewählten Umsetzungsbedingungen mit den in der Reaktionsmischung vorhandenen Isocyanatgruppen reagiert und
   H) gegebenenfalls einer aliphatischen Polyisocyanat-Komponente mit einer mittleren Isocyanatfunktionalität von > 2,6 und ≤ 4,
   wobei die Komponenten B) und F) zusammen ≤ 30 Gew.-% an Komponente F), bezogen auf die Gesamtmasse der Komponenten B) und F) enthalten,
   sowie
(V2) eine Polycarbodiimid-Komponente.

Bevorzugt sind die Komponenten A) bis H) die gleichen, wie für die entsprechenden Komponenten aufgeführten Auswahlen für den Klebstoff. Das gleiche gilt für die Polycarbodiimid-Komponente (V2). Alle im Zusammenhang mit dem Klebstoff aufgeführten Eigenschaften, Mengen, Verhältnisse und Zusammensetzungen bezüglich der Komponenten A) bis H) sowie (V2) gelten für die Polyurethanharnstoff-Dispersion und die eingesetzte Polycarbodiimid-Komponente ebenfalls.

Bevorzugt weist die Polyurethanharnstoff-Dispersion ein molares Verhältnis der Carboxy- oder Carboxylatgruppen aus (V1) zu Carbodiimidgruppen aus (V2) in einem Bereich von 5:1 bis 1:5, oder bevorzugt in einem Bereich von 2:1 bis 1:2 oder bevorzugt in einem Bereich von 1,3:1 bis 1: 1,3 auf.

Ein weiterer Gegenstand der Erfindung betrifft ein Verfahren zur Herstellung eines Schichtaufbaus beinhaltend mindestens eine Klebstoffschicht, umfassend die Schritte:
(I) Mischen einer Polycarbodiimid-Komponente (V2) zu einem Polyurethanharnstoff (V1) in Form einer wässrigen Dispersion unter Erhalt einer erfindungsgemäßen Polyurethanharnstoff-Dispersion,
(II) Aufbringen der Polyurethanharnstoff-Dispersion auf eine erste weitere Schicht, unter Erhalt eines Vorläufers,
(III) thermische Behandlung des Vorläufers aus Schritt (II) bei Temperaturen in einem Bereich von 20 °C bis 200 °C, unter Bildung der Klebstoffschicht.

Die in dem Verfahren hergestellte Klebstoffschicht ist bevorzugt so ausgestaltet wie die zuvor beschriebene Klebstoffschicht. Bevorzugt weist die mit dem erfindungsgemäßen Verfahren hergestellte Klebstoffschicht die gleichen Materialien, Eigenschaften und Ausgestaltungen auf, wie bereits für die erfindungsgemäße Klebstoffschicht beschrieben.

Das Mischen der Polycarbodiimid-Komponente (V2) zu dem Polyurethanharnstoff (V1) in Form einer wässrigen Dispersion unter Erhalt einer Polyurethanharnstoff-Dispersion kann auf jede Art erfolgen, die der Fachmann hierfür auswählen würde. Bevorzugt findet das Mischen mit Hilfe eines Rührers oder eines Mixers oder einer Kombination aus beidem statt. Bevorzugt wird das Mischen bei einer solchen Mischgeschwindigkeit durchgeführt, sodass eine homogene Durchmischung der Komponenten (V1) und (V2) zu der Polyurethanharnstoff-Dispersion innerhalb von wenigen Minuten, bevorzugt innerhalb von weniger als 5 Minuten, oder bevorzugt innerhalb von weniger als 3 Minuten erfolgt.

Die Mischung mindestens der Komponenten (V1) und (V2) in Form der Polyurethanharnstoff-Dispersion weist bevorzugt eine ausreichend lange Verarbeitbarkeit auf, um die Dispersion zu dem gewünschten Produkt in Form des Klebstoffs verarbeiten zu können. Die Mischung aus (V1) und (V2) kann direkt nach ihrer Herstellung verwendet werden. Bevorzugt weist die Mischung bei einer adäquaten Lagerung bevorzugt bei Temperaturen unterhalb von 40 °C eine Stabilität von mehreren Monaten, bevorzugt von mindestens 6 Monaten, oder bevorzugt von mindestens 3 Monaten, oder bevorzugt von mindestens 2 Monaten auf. Nach diesem Zeitraum weist die Mischung bevorzugt immer noch eine Viskosität auf, die es erlaubt die Mischung zu dem Klebstoff zu verarbeiten, insbesondere ein Substrat mit der Mischung zu bestreichen, um diese zu verkleben. Unter Stabilität wird bevorzugt verstanden, dass sich die Viskosität der Mischung in dieser Zeit der Lagerung nicht mehr als verdoppelt.

Das Aufbringen des bevorzugt amorphen Polyurethanharnstoffes auf die erste weitere Schicht in Schritt (II) kann mittels jeder Methode erfolgen, die der Fachmann hierfür auswählen würde. Bevorzugt findet das Aufbringen des bevorzugt amorphen Polyurethanharnstoffs in Form der wässrigen Polyurethanharnstoff-Dispersion durch eine Methode statt ausgewählt aus der Gruppe bestehend aus Drucken, Pinseln, Rakeln, Sprühen, Beschichten mit anderen bekannten Beschichtungsverfahren Die Polyurethanharnstoff-Dispersion kann in mehreren Lagen auf die erste weitere Schicht aufgebracht werden. Bevorzugt wird die Polyurethanharnstoff-Dispersion in 1 bis 10 Lagen, oder bevorzugt in 2 bis 10 Lagen, oder bevorzugt in 3 bis 10 Lagen auf die erste weitere Schicht aufgebracht. Die erste weitere Schicht ist beim Aufbringen der Polyurethanharnstoff-Dispersion bevorzugt so gelagert, dass sich die Polyurethanharnstoff-Dispersion möglichst gleichmäßig auf der Oberfläche der ersten weiteren Schicht verteilt. Nach Aufbringen der Polyurethanharnstoff-Dispersion auf die erste weitere Schicht wird der Vorläufer erhalten. Der Vorläufer kann bevor er dem zweiten Schritt (III) des Verfahrens zugeführt wird mit einer zweiten weiteren Schicht überdeckt werden. Das Überdecken kann jedoch auch nach dem Schritt (III) oder während des Schrittes (III) erfolgen.

Bevorzugt wird die Viskosität der Polyurethanharnstoff-Dispersion vor dem Aufbringen in Schritt (II) auf die benötigten Gegebenheiten durch Verdünnen oder Verdicken oder eine Kombination beider Methoden angepasst, um gewünschte Auftragsdicken zu erzielen. Dabei können als Zuschlagsstoffe L) bevorzugt in der Komponente (V2) Verdicker Verwendung finden. Typische Verdicker sind lösliche Polymere auf Polyacrylat- oder Polyurethanbasis, wie sie aus dem Stand der Technik bekannt sind. Bevorzugt sind Verdicker auf Basis von Polyurethanpolymeren. Zur Verdünnung der Polyurethanharnstoff-Dispersion können gängige Lösemittel, bevorzugt jedoch Wasser eingesetzt werden.

Typische weitere geeignete Zuschlags- und Hilfsstoffe L) sind Oberflächenadditive wie z.B. Benetzungshilfsmittel, Farbstoffe und/oder Verlaufshilfsmittel. Die Polyurethanharnstoff-Dispersion kann auch alle weiteren dem Fachmann für die jeweilige Anwendung bekannten Zuschlagstoffe enthalten.

Das Drucken kann jedes Druckverfahren der Polyurethanharnstoff-Dispersion beinhalten, das der Fachmann hierfür auswählen würde. Bevorzugt ist das Druckverfahren ausgewählt aus der Gruppe bestehend aus einem Siebdruckverfahren, einem Inkjet Verfahren, einem Tiefdruckverfahren, einem Offsetdruckverfahren, einem Walzendruckverfahren, einem Gravurdruckverfahren oder einer Kombination aus mindestens zwei hiervon. Beispiele für das Inkjet Druckverfahren sind das "Continuous Inkjet" Druckverfahren, bei dem das zu druckende Material in einem kontinuierlichen Strahl auf das Substrat aufgebracht wird oder das "Drop on Demand" Drucken, bei dem einzelne Tropfen auf das zu bedruckende Substrat aufgebracht werden. Mit all diesen Druckverfahren kann eine vollflächige Auftragung der Polyurethanharnstoff-Dispersion erfolgen oder auch eine teilflächige. Ebenso kann die Polyurethanharnstoff-Dispersion in einem bestimmten Muster aufgebracht werden, auch als "Pattern Coating" bezeichnet. Dabei kann die Dispersion durch alle dem Fachmann bekannten Verfahren, u.a. und insbesondere durch Gravurdruck, Siebdruck oder Inkjet-Druck aufgetragen werden.

Bevorzugt wird die Polyurethanharnstoff-Dispersion mit einem Auftragsgewicht in einem Bereich von 5 g/m² bis 200 g/m² auf das Substrat, hier die erste weitere Schicht oder die zweite weitere Schicht, aufgebracht.

Für den Rakelauftrag wird die erste weitere Schicht bevorzugt in einer Spannvorrichtung zuvor fixiert und anschließend kann das Rakel mit der Dispersion davorliegend per Hand oder automatisiert über die erste weitere Schicht geführt und dabei die Dispersion gleichmäßig auf diesem verteilt werden. Ebenso kann die Beschichtung über eine typische Rolle-zu-Rolle-Beschichtungsanlage mit Rakel erfolgen, bei der die erste weitere Schicht kontinuierlich beschichtet wird.

Beim Sprühverfahren wird die erste weitere Schicht bevorzugt in einen Rahmen gespannt und mit der Dispersion aus einer Sprühpistole ein- oder beidseitig besprüht. Der Auftrag kann in einem oder mehreren Kreuzgängen manuell oder über eine kontinuierliche Rolle-zu-Rolle-Sprühanlage erfolgen.

Die erste weitere Schicht ist bevorzugt so ausgestaltet wie für die erste weitere Schicht im Zusammenhang mit der erfindungsgemäßen Klebstoffschicht beschrieben.

Die thermische Behandlung in Schritt (III) kann auf jede Art und Weise erfolgen, wie sie der Fachmann hierfür auswählen würde. Bevorzugt findet die thermische Behandlung unter Anwendung von erhöhter Temperatur gegenüber Raumtemperatur statt. Die thermische Behandlung kann an jedem dafür geeigneten Ort stattfinden. Bevorzugt findet die thermische Behandlung in einem Raum ausgewählt aus der Gruppe bestehend aus einem Trockenraum, einem Trockenofen, einem Trockenrohr, oder einer Kombination aus mindestens zwei hiervon. Die thermische Trocknung kann durch IR- oder Mikrowellentrocknung ersetzt oder unterstützt werden. Die thermische Behandlung findet erfindungsgemäß bei einer Temperatur in einem Bereich von 20 °C bis 200 °C, bevorzugt in einem Bereich von 30 °C bis 200 °C, oder bevorzugt in einem Bereich von 50 °C bis 200 °C, oder bevorzugt in einem Bereich von 80 °C bis 200 °C, oder bevorzugt in einem Bereich von 20 °C bis 180 °C, oder bevorzugt in einem Bereich von 20 °C bis 150 °C, oder bevorzugt in einem Bereich von 20 °C bis 100 °C, oder bevorzugt in einem Bereich von 50 °C bis 150 °C statt. Bevorzugt findet die thermische Behandlung für einen Zeitraum in einem Bereich von 1 Minute bis 10 Stunden, oder bevorzugt in einem Bereich von 10 Minuten bis 5 Stunden, oder bevorzugt in einem Bereich von 30 Minuten bis 2 Stunden statt. Bevorzugt wird mindestens die Oberfläche der Polyurethanharnstoff-Dispersion mit einem Gas, bevorzugt Luft, überströmt, sodass eine schnellere Trocknung der Polyurethanharnstoff-Dispersion zu der Klebstoffschicht erfolgen kann.

Eine bevorzugte Ausgestaltung des zuvor beschriebenen Verfahrens, umfasst mindestens einen der folgenden weiteren Schritte:
(IV) Ablösen der Klebstoffschicht von der ersten weiteren Schicht;
(V) Übertragen der Klebstoffschicht von der ersten weiteren Schicht auf eine zweite weitere Schicht;
(VI) Überdecken der Klebstoffschicht mit einer zweiten weiteren Schicht auf der ersten Oberfläche der ersten Schicht;
(VII) Überdecken der Klebstoffschicht mit einer zweiten weiteren Schicht auf der ersten weiteren Oberfläche der ersten Schicht;
(VIII) Übertragen der Klebstoffschicht von der ersten weiteren Schicht auf ein Substrat;
(IX) Übertragen der Klebstoffschicht von der ersten weiteren Schicht auf mindestens einen Teil einer Bauteiloberfläche eines Bauteils;
(X) Übertragen der Klebstoffschicht von der ersten weiteren Schicht auf eine dritte weitere Schicht.

Das Ablösen der Klebstoffschicht in Schritt (IV) kann auf jede Art und Weise erfolgen, die der Fachmann hierfür vorsehen würde. Das Ablösen der Klebstoffschicht in Schritt (IV) erfolgt bevorzugt durch einen Spatel, beispielsweise einen Holz-, Plastik-, oder Metallspatel.

Das Übertragen der Klebstoffschicht von der ersten weiteren Schicht auf eine zweite weitere Schicht in Schritt (V) kann auf jede Art und Weise erfolgen, die der Fachmann hierfür vorsehen würde. Das Übertragen der Klebstoffschicht in Schritt (V) erfolgt bevorzugt durch Auflegen einer zweiten weiteren Schicht auf den nicht bedeckten Teil der Klebstoffschicht, wobei durch Druck auf die erste weitere Schicht die Klebstoffschicht übertragen wird. Der Druck kann beispielsweise durch Drehen der Klebstoffschicht erfolgen, sodass die zweite weitere Schicht die Klebstoffschicht trägt und allein durch die Schwerkraft auf dieser liegen bleibt, wenn die erste weitere Schicht entfernt wird. Ebenso kann Schritt (V) durch einen Umlaminierungsprozess, bevorzugt im kontinuierlichen Verfahren Rolle-zu-Rolle erfolgen. Der Laminierungsschritt erfolgt bevorzugt bei Temperaturen zwischen 5 °C und 200 °C.

Das Überdecken der Klebstoffschicht mit einer zweiten weiteren Schicht auf der ersten Oberfläche der ersten Schicht in Schritt (VI) kann auf jede Art und Weise erfolgen, die der Fachmann hierfür vorsehen würde. Das Überdecken der Klebstoffschicht in Schritt (VI) erfolgt bevorzugt durch Auflegen oder Auflaminieren einer zweiten weiteren Schicht auf der ersten Oberfläche der ersten Schicht.

Das Überdecken der Klebstoffschicht mit einer zweiten weiteren Schicht auf der ersten weiteren Oberfläche der ersten Schicht in Schritt (VII) kann auf jede Art und Weise erfolgen, die der Fachmann hierfür vorsehen würde. Das Überdecken der Klebstoffschicht in Schritt (VII) erfolgt bevorzugt durch Auflegen oder Auflaminieren einer zweiten weiteren Schicht auf der ersten weiteren Oberfläche der ersten Schicht.

Das Übertragen der Klebstoffschicht von der ersten weiteren Schicht auf ein Substrat in Schritt (VIII) kann auf jede Art und Weise erfolgen, die der Fachmann hierfür vorsehen würde. Das Übertragen der Klebstoffschicht in Schritt (VIII) erfolgt bevorzugt durch Auflegen des Substrats auf den nicht bedeckten Teil der Klebstoffschicht, wobei durch Druck auf die erste weitere Schicht die Klebstoffschicht auf das Substrat übertragen wird, wie für Schritt (V) beschrieben.

Das Übertragen der Klebstoffschicht von der ersten weiteren Schicht auf mindestens einen Teil einer Bauteiloberfläche eines Bauteils in Schritt (IX) kann auf jede Art und Weise erfolgen, die der Fachmann hierfür vorsehen würde. Das Übertragen der Klebstoffschicht in Schritt (IX) erfolgt bevorzugt durch Auflegen der Bauteiloberfläche des Bauteils auf den nicht bedeckten Teil der Klebstoffschicht, wobei durch Druck auf die erste weitere Schicht die Klebstoffschicht auf das Bauteil übertragen wird, wie für Schritt (V) beschrieben.

Das Übertragen der Klebstoffschicht von der ersten weiteren Schicht auf eine dritte weitere Schicht in Schritt (X) kann auf jede Art und Weise erfolgen, die der Fachmann hierfür vorsehen würde. Das Übertragen der Klebstoffschicht in Schritt (X) erfolgt bevorzugt durch Auflegen der dritten weiteren Schicht auf den nicht bedeckten Teil der Klebstoffschicht, wobei durch Druck auf die erste weitere Schicht die Klebstoffschicht übertragen wird, insbesondere wie für Schritt (V) beschrieben.

Bevorzugt sind das Material, die Eigenschaften und die Form der dritten weiteren Schicht so ausgestaltet, wie für die erste weitere Schicht zuvor beschrieben. Die dritte weitere Schicht ist bevorzugt gleich der ersten oder zweiten weiteren Schicht aufgebaut.

Ein weiterer Gegenstand der Erfindung betrifft die Verwendung des erfindungsgemäßen Klebstoffs oder der erfindungsgemäßen Klebstoffschicht zur Befestigung eines Produktes auf einem Gegenstand oder der Haut eines Lebewesens.

Bei der Verwendung des erfindungsgemäßen Klebstoffes wird bevorzugt mindestens einer der folgenden Schritte durchgeführt:
❖ Der Klebstoff wird mit dem Produkt in Kontakt gebracht. Bevorzugt haftet der Klebstoff beim Inkontaktbringen mit dem Produkt mehr an dem Produkt als an der ersten weiteren Schicht, der zweiten weiteren Schicht oder der dritten weiteren Schicht, auf dem der Klebstoff in Form der Klebstoffschicht produziert oder auf den der Klebstoff übertragen wurde.
❖ Das Produkt wird mit einem weiteren Gegenstand, einem weiteren Produktteil oder der Haut eines Verwenders in Kontakt gebracht. Das Produkt haftet bevorzugt nach dem Inkontaktbringen mit dem Gegenstand, dem weiteren Produktteil oder der Haut so stark mit deren Oberfläche, dass es bei gewöhnlicher Benutzung des Produktes sich nicht wieder hiervon löst. Unter gewöhnlicher Benutzung wird die marktübliche Verwendung des Produktes verstanden, wie der Fachmann sie verstehen würde. Hierzu zählen alle alltäglichen Verrichtungen wie Duschen, normale Bewegung, normale Tätigkeiten des Patienten.
❖ Das Produkt wird nach seiner gewünschten Tragezeit unter Aufwand einer Kraft in einem Bereich von 0,1 bis 10,0 N/20 mm, bevorzugt 0,15 bis 5 N/20 mm von dem Substrat entfernt. Das Substrat kann auch die Haut des Verwenders sein.

Bevorzugt handelt es sich bei dem zu befestigenden Produkt um eines der zuvor beschriebenen Produkte.

Bevorzugt findet die Verwendung des erfindungsgemäßen Klebstoffs in und auf einem Produkt im medizinischen Bereich, insbesondere zur Befestigung des Produktes auf der Haut eines Lebewesens statt. Insbesondere im Bereich der medizinischen, besonders der chirurgischen Anwendungen, ist es wünschenswert eine gute Klebkraft der medizinischen Produkte auf der Haut des Lebewesens, insbesondere des menschlichen oder tierischen Patienten, zu gewährleisten. Bevorzugt weist das medizinische Produkt weiterhin folgende Merkmale auf:
(1) eine Verweildauer auf der Haut in einem Bereich von 1 Sekunde bis 180 Tage:
(2) eine Minderung der Klebkraft über die Verweildauer von 10 Tagen von weniger als 50 %, bevorzugt von weniger als 30 %, oder bevorzugt von weniger als 10 %, bezogen auf die ursprüngliche Klebkraft.

Aus dem erfindungsgemäßen Klebstoff wird bevorzugt eine Klebstoffschicht gebildet, umfassend
- mindestens eine erste Schicht, umfassend mindestens eine erste Oberfläche und mindestens eine erste weitere Oberfläche, wobei die erste Oberfläche im Wesentlichen parallel zur ersten weiteren Oberfläche verläuft,
wobei die erste Schicht den zuvor beschriebenen erfindungsgemäßen Klebstoff beinhaltet.

Bevorzugt beinhaltet die Klebstoffschicht den Klebstoff in einem Bereich von 60 bis 100 Gew.-%, oder bevorzugt in einem Bereich von 70 bis 100 Gew.-%, oder bevorzugt in einem Bereich von 80 bis 100 Gew.-%, bezogen auf das Gesamtgewicht der Klebstoffschicht.

Die Klebstoffschicht beinhaltet bevorzugt mindestens eine weitere Komponente in einem Bereich von 0 bis 40 Gew.-%, oder bevorzugt in einem Bereich von 0 bis 30 Gew.-%, oder bevorzugt in einem Bereich von 0 bis 20 Gew.-%, bezogen auf das Gesamtgewicht der Klebstoffschicht. Weiterhin bevorzugt beinhaltet die Klebstoffschicht die weitere Komponente in einem Bereich von 0,1 bis 20 Gew.-%, oder bevorzugt in einem Bereich von 0,5 bis 15 Gew.-%, oder bevorzugt in einem Bereich von 1 bis 10 Gew.-%, bezogen auf die Gesamtmasse der Klebstoffschicht. Die weitere Komponente kann ausgewählt sein aus der Gruppe bestehend aus Wasser, einem Verdicker, einem Verdünner, einem Füller, wie Calcit oder Talkum), einem Farbstoff, einem Superabsorber (beispielsweise basierend auf einem Polyacrylat oder Carboxymethylcellulose), einem antimikrobiellen oder pharmazeutisch wirksamen Stoff (beispielsweise growth factors, Peptide, Schmerzmittel, Mittel, die die Wundheilung beschleunigen, Silber, Polyhexanid u.a.), einem Desinfektionsmittel, wie einem Bakterizid oder Fungizid, oder einer Kombination aus mindestens zwei davon.

Die Klebstoffschicht weist bevorzugt eine Dicke in einem Bereich von 2 µm bis 20 mm, oder bevorzugt in einem Bereich von 5 µm bis 10 mm, oder bevorzugt in einem Bereich von 10 µm bis 2000 µm, oder bevorzugt in einem Bereich von 40 µm bis 800 µm. Bevorzugt weist die Klebstoffschicht über ihre gesamte, bevorzugt flächenförmige, Ausdehnung die gleiche Dicke auf. Unter gleicher Dicke wird erfindungsgemäß verstanden, dass die Dicke über die gesamte Klebstoffschicht nicht mehr als 10 % von der mittleren Dicke der Klebstoffschicht abweicht. Die mittlere Dicke der Klebstoffschicht ist gemäß der Erfindung das Mittel aus den ermittelten Werten der Dicke an der jeweils dünnsten und der jeweils dicksten Stelle der Klebstoffschicht. Die Werte für die Dickenbestimmung sind mittels einer handelsüblichen Mikrometerschraube bestimmbar.

Die Klebstoffschicht weist in ihrer größten Flächenausdehnung bevorzugt eine Form auf, ausgewählt aus der Gruppe bestehend aus rund, eckig, rechtwinklig, quadratisch, elliptisch, trapezförmig, rautenförmig oder einer Kombination aus mindestens zwei hiervon. Bevorzugt ist die Klebstoffschicht rechteckig oder elliptisch.

Die Klebstoffschicht weist bevorzugt eine Breite in einem Bereich von 1 mm bis 10 m, oder bevorzugt in einem Bereich von 1 cm bis 10 m, oder bevorzugt in einem Bereich von 1 m bis 10 m, oder bevorzugt in einem Bereich von 1 mm bis 5 m, oder bevorzugt in einem Bereich von 1 mm bis 1 m, oder bevorzugt in einem Bereich von 5 mm bis 5 m, oder bevorzugt in einem Bereich von 1 cm bis 1 m auf.

Die Klebstoffschicht weist bevorzugt eine Länge in einem Bereich von 2 mm bis 100 m, oder bevorzugt in einem Bereich von 1 cm bis 10 m, oder bevorzugt in einem Bereich von 10 cm bis 10 m, oder bevorzugt in einem Bereich von 2 mm bis 50 m, oder bevorzugt in einem Bereich von 2 mm bis 10 m, oder bevorzugt in einem Bereich von 5 mm bis 50 m, oder bevorzugt in einem Bereich von 1 cm bis 10 m auf.

Die Klebstoffschicht weist erfindungsgemäß mindestens zwei Oberflächen auf, eine erste Oberfläche sowie eine erste weitere Oberfläche. Die erste Oberfläche und die erste weitere Oberfläche verlaufen erfindungsgemäß im Wesentlichen parallel zueinander. Im Rahmen der Erfindung wird unter im Wesentlichen parallel verstanden, dass sich die beiden Oberflächen an keiner Stelle des Verlaufs der der Klebstoffschicht berühren. Bevorzugt werden die beiden im Wesentlichen parallel zueinander verlaufenden Oberfläche, nämlich die erste Oberfläche und die erste weitere Oberfläche an den Rändern der Klebstoffschicht durch mindestens eine zweite weitere Oberfläche voneinander getrennt. Die Ausdehnung dieser zweiten weiteren Oberfläche im Lot zwischen der ersten Oberfläche und der ersten weiteren Oberfläche bildet an den Rändern der Klebstoffschicht deren Dicke. Bevorzugt weisen die erste Oberfläche sowie die erste weitere Oberfläche eine flächenförmige Ausdehnung auf. Weiterhin bevorzugt weisen die erste Oberfläche und die erste weitere Oberfläche eine nahezu identische Gesamtfläche auf. Unter nahezu identischer Gesamtfläche wird eine Abweichung der Gesamtflächen der ersten zu der ersten weiteren Oberfläche von nicht mehr als 50 %, bevorzugt nicht mehr als 30 %, oder bevorzugt nicht mehr als 10 %, oder bevorzugt nicht mehr als 5 %, bezogen auf die Gesamtfläche der ersten Oberfläche verstanden.

Die Form der Oberfläche der ersten Oberfläche und/oder der ersten weiteren Oberfläche ist bevorzugt ausgewählt aus der Gruppe bestehend aus plan, gebogen, geknickt oder einer Kombination aus mindestens zwei hiervon. Die erste Oberfläche und/oder die erste weitere Oberfläche können sich jeweils auch über mehrere, bevorzugt zwei, drei oder vier aneinander grenzenden Flächen erstrecken. Bevorzugt weisen die aneinander grenzenden Flächen, die die Oberfläche der ersten Oberfläche und/oder ersten weiteren Oberfläche eine Neigung zueinander in einem Bereich von weniger als 45°, oder bevorzugt von weniger als 40°, oder bevorzugt von weniger als 30° zueinander auf. Die Oberfläche der ersten Oberfläche und/oder der ersten weiteren Oberfläche ist bevorzugt plan.

Die Gesamtfläche der ersten Oberfläche und/oder der ersten weiteren Oberfläche liegt bevorzugt in einem Bereich von 1 mm² bis 1000 m², oder bevorzugt in einem Bereich von 100 mm² bis 500 m², oder bevorzugt in einem Bereich 1 cm² bis 100 m².

Die Klebstoffschicht weist bevorzugt mindestens eines der folgenden Merkmale auf:
a) eine Wasserdampfdurchlässigkeit (MVTR) in einem Bereich von mindestens 800 g/d m², bevorzugt ≥ 1200 g/d m² und besonders bevorzugt ≥ 1500 g/d m².
b) eine Länge und eine Breite die mindestens das 10-fache, bevorzugt mindestens das 20-, oder bevorzugt mindestens das 30-, oder bevorzugt mindestens das 40-fache, oder bevorzugt mindestens das 100-fache der Dicke der Klebstoffschicht entspricht;
c) eine Klebekraft in einem Bereich von ≥ 0,25 N/20 mm, oder bevorzugt von ≥ 0,5 N/20 mm, oder bevorzugt von ≥ 1,0 N/20 mm, oder bevorzugt von ≥ 1,3 N/20 mm, ermittelt über 90° Peel Test gegen Alublech, DIN EN 1464;

Bevorzugt liegen die so ermittelten Klebkräfte in einem Bereich von 0,25 bis 20 N/20 mm, oder bevorzugt von 0,5 bis 15 N/20 mm, oder bevorzugt von 1,0 bis 12,5 N/20 mm, oder bevorzugt von 1,3 bis 12,0 N/20 mm, oder bevorzugt von 1,5 bis 10,0 N/20 mm.

In einer bevorzugten Ausgestaltung der Klebstoffschicht, ist die Klebstoffschicht auf ihrer ersten Oberfläche mindestens von einer ersten weiteren Schicht mindestens zu einem Teil überlagert.

Bevorzugt überlagert die erste weitere Schicht die erste Oberfläche der Klebstoffschicht in einem Bereich von 50 bis 100 %, oder bevorzugt in einem Bereich von 60 bis 100 %, oder bevorzugt in einem Bereich von 70 bis 100 %, oder bevorzugt in einem Bereich von 80 bis 100 %, bezogen auf die Gesamtfläche der ersten Oberfläche der Klebstoffschicht. Bevorzugt weist die erste weitere Schicht mindestens eine erste Schichtoberfläche sowie eine weitere Schichtoberfläche auf. Die erste und/oder weitere Schichtoberfläche der ersten weiteren Schicht weist bevorzugt eine Fläche in einem Bereich von 1 mm² bis 1000 m², oder bevorzugt in einem Bereich von 100 mm² bis 500 m², oder bevorzugt in einem Bereich 1 cm² bis 100 m². Bevorzugt weist die erste und/oder weitere Schichtoberfläche der ersten weiteren Schicht eine Gesamtoberfläche auf, die größer ist als die Gesamtoberfläche der ersten Oberfläche der Klebstoffschicht. Bevorzugt weist die erste und/oder weitere Schichtoberfläche der ersten weiteren Schicht eine Gesamtoberfläche in einem Bereich von 105 bis 200 %, oder bevorzugt in einem Bereich von 110 bis 190 %, oder bevorzugt in einem Bereich von 120 bis 180 %, bezogen auf die Gesamtoberfläche der ersten Oberfläche der Klebstoffschicht, auf. In einer weiteren bevorzugten Ausführung weist die erste und/oder weitere Schichtoberfläche der ersten weiteren Schicht eine Gesamtoberfläche auf, die gleich groß ist wie die Gesamtoberfläche der ersten Oberfläche der Klebstoffschicht.

Bevorzugt steht die erste Schichtoberfläche der ersten weiteren Schicht mit der ersten Oberfläche der Klebstoffschicht in direktem Kontakt. Alternativ kann mindestens zu einem Teil zwischen der ersten weiteren Schicht und der Klebstoffschicht ein zusätzliches Material, wie ein Primer, beispielsweise auf Alkyd- oder Acrylharz Basis, angeordnet sein. Die erste weitere Schicht wird bevorzugt vor Kontaktierung durch die Klebstoffschicht mittels einer Oberflächenbehandlungsmethode ausgewählt aus der Gruppe bestehend aus Plasmabehandlung, Ozonbehandlung und Coronabehandlung oder einer Kombination aus mindestens zwei hiervon, vorbehandelt.

Die mindestens eine erste weitere Schicht beinhaltet bevorzugt ein Material ausgewählt aus der Gruppe bestehend aus einem Polymer, einem Vliesstoff (auch non-woven genannt), einem Gewebe, einem Glas, einem Metall, einer Keramik, einem Mineral, einem Papier oder einer Kombination oder Mischung von mindestens zwei hieraus.

Das Polymer kann jedes Polymer sein, das der Fachmann für die erste weitere Schicht auswählen würde. Das Polymer ist bevorzugt ausgewählt aus der Gruppe bestehend aus einem Polyvinylchlorid, einem Polyolefin, wie Polyethylen oder Polypropylen, einem Polyimid, einem Polyethylenterephthalat, einem Polybutylenterephthalat, einem Polycarbonat, einem Polyamid, einem Polyurethan, wie einem thermoplastischen Polyurethan, einem Silikon oder einer Mischung oder Kombination aus mindestens zwei hiervon. Besonders bevorzugt ist das Polymer ausgewählt aus der Gruppe bestehend aus einem Polyester, einem Polyolefine, einem Polyvinylchlorid, einem Silikon, einem thermoplastischen Polyurethan, darunter besonders bevorzugt ein thermoplastisches Polyurethan.

Der Vliesstoff kann jeder Vliesstoff sein, den der Fachmann für die erste weitere Schicht auswählen würde. Der Vliesstoff ist bevorzugt ausgewählt aus der Gruppe bestehend aus pflanzlichen Fasern, wie Baumwolle, tierischen Fasern, wie Wolle, Chemiefasern aus natürlichen Polymeren, wie Viskose, Chemiefasern aus synthetischen Polymeren, wie Polyestervliesstoffe, und Chemiefasern aus mineralischen Stoffen, wie Glasfaservliesstoff, Carbonfaservliesstoff, Edelstahlfaservliesstoff, Basaltfaservliesstoff oder einer Mischung von mindestens zwei hiervon.

Das Gewebe kann jedes Gewebe sein, das der Fachmann für die erste weitere Schicht auswählen würde. Das Gewebe ist bevorzugt ausgewählt aus der Gruppe bestehend aus einem Baumwollgewebe, einem Wollgewebe oder einer Kombination aus mindestens zwei hieraus.

Das Glas kann jedes Glas sein, das der Fachmann für die erste weitere Schicht auswählen würde. Das Glas kann ein metallisches Glas oder ein nicht-metallisches Glas sein. Bevorzugt ist das Glas ein nicht-metallisches Glas. Das Glas ist bevorzugt ausgewählt aus der Gruppe bestehend aus einem silikatischen Glas, wie Quarzglas, einem Boratglas, einem Phosphatischen Glas, einem Chalkogenitglas, einem Halogenidglas oder einer Mischung aus mindestens zwei hieraus.

Das Metall kann jedes Metall sein, das der Fachmann für die erste weitere Schicht auswählen würde. Das Metall ist bevorzugt ausgewählt aus der Gruppe bestehend aus Kupfer, Eisen, Silber, Gold, Platin, Palladium, Nickel, einer Bronze-Legierung, einer Messing-Legierung oder einer Mischung oder Kombination von mindestens zwei hieraus.

Die Keramik kann jede Keramik sein, die der Fachmann für die erste weitere Schicht auswählen würde. Die Keramik ist bevorzugt eine Oxid-Keramik oder eine Nicht-Oxid-Keramik. Die Oxid-Keramik ist bevorzugt ausgewählt aus der Gruppe bestehend einer Aluminiumoxidkeramik, wie Korund, einer Berylliumoxidkeramik, einer Zirconium(IV)-oxid-Keramik, einer Titan(IV)-oxid-Keramik, einer Aluminiumtitan-Keramik, einer Bariumtitanat-Keramik oder einer Mischung oder Kombination aus mindestens zwei hieraus. Die Nicht-Oxid-Keramik ist bevorzugt ausgewählt aus der Gruppe bestehend aus einem Siliciumcarbin, einem Bornitrid, einem Borcarbid, einem Siliciumnitrid, einem Aluminiumbitrid, einem Molybdänsilicid, einem Wolframcarbin oder einer Mischung oder Kombination aus mindeste zwei hiervon.

Das Mineral kann jedes Mineral sein, das der Fachmann für die erste weitere Schicht auswählen würde. Unter einem Mineral wird gemäß der Erfindung ein Element oder eine chemische Verbindung verstanden, die im Allgemeinen kristallin und durch geologische Prozesse gebildet worden ist. Der Begriff "chemische Verbindung" beinhalten eine feste Zusammensetzung und eine definierte chemische Struktur. Stoffgemische sind keine Minerale. Die Zusammensetzungen von Mineralen können jedoch eine gewisse Variation aufweisen (Mischkristalle), solange sie strukturell homogen sind.

Das Mineral kann aus organischen Bestandteilen aufgebaut sein oder aus anorganischen Bestandteilen oder aus einer Kombination aus beiden. Die organischen Bestandteile sind bevorzugt ausgewählt aus der Gruppe bestehend aus Mellit, Evenkit, Whewellit, Weddellit oder eine Mischung aus mindestens zwei hiervon. Die anorganischen Bestandteile sind bevorzugt ausgewählt aus der Gruppe bestehend aus Borax, Bernstein, Kalifeldspat, Feldspat, Clacit, Kaolinit oder einer Kombination aus mindestens zwei hiervon.

Das Papier kann jedes Papier sein, das der Fachmann für die erste weitere Schicht auswählen würde. Das Papier ist bevorzugt ausgewählt aus der Gruppe bestehend einem Naturpapier und einem synthetischen Papier oder einer Kombination hieraus. Das Naturpapier beinhaltet als einen Hauptbestandteil Cellulose. Das synthetische Papier kann darüber hinaus ein Polymer beinhalten. Das Polymer ist bevorzugt ausgewählt aus der Gruppe der Polymere, wie oben beschrieben. Das Papier weist bevorzugt eine flächenbezogene Masse in einem Bereich von 20 bis 500 g/m², oder bevorzugt in einem Bereich von 20 bis 400 g/m², oder bevorzugt in einem Bereich von 20 bis 200 g/m², oder bevorzugt in einem Bereich von 50 bis 500 g/m², oder bevorzugt in einem Bereich von 100 bis 500 g/m², oder bevorzugt in einem Bereich von 200 bis 500 g/m² auf.

Das Papier weist bevorzugt eine Beschichtung auf. Die Beschichtung beinhaltet bevorzugt ein Polymer ausgewählt aus der Gruppe, wie bereits oben beschrieben. Bevorzugt überlagert das Polymer das Papier zu mindestens 50 %, oder bevorzugt zu mindestens 60 %, oder zu mindestens 80 %, bezogen auf die Gesamtoberfläche des Papiers. Besonders bevorzugt überlagert das Polymer das Papier auf dessen Gesamtoberfläche. Bevorzugt ist das Polymer ein Silikon oder ein Polyolefin, das ein Wachs auf dem Papier ausbildet. Die Parameter zur Beschichtung des Papiers durch einen Silikon- oder Polyolefinwachs wird bevorzugt so gewählt, dass die Klebstoffschicht rückstandsfrei von dem Papier ablösbar ist.

Die Oberflächenrauheit der ersten weiteren Schicht, insbesondere der Papierschicht, liegt bevorzugt in einem Bereich von Rz < 2000 nm, bevorzugt < 1500 nm, oder bevorzugt < 1000 nm. Die Oberflächenrauheit wird mittels Weißlichtinterferometrie (Messung im PSI-Modus) in Anlehnung an DIN EN ISO 25178, Part 6 ermittelt.

In einer bevorzugten Ausgestaltung der Klebstoffschicht ist die Klebstoffschicht auf ihrer ersten weiteren Oberfläche mindestens von einer zweiten weiteren Schicht mindestens zu einem Teil überlagert. Die zweite weitere Schicht kann aus jedem Material gefertigt sein, das der Fachmann für die zweite weitere Schicht auswählen würde. Die zweite weitere Schicht weist bevorzugt die gleichen Bestandteile, Materialien, Eigenschaften, Formen und Dimensionen auf wie für die erste weitere Schicht beschrieben.

Bevorzugt stehen die erste weitere Schicht und/oder die zweite weitere Schicht in direktem Kontakt zu der ersten Schicht. Alternativ kann zwischen der ersten weiteren Schicht und/oder der zweiten weiteren Schicht und der ersten Schicht eine dritte weitere Schicht angeordnet sein. Die Eigenschaften, Materialien, Formen und Dimensionen der dritten weiteren Schicht sind bevorzugt aus der Liste ausgewählt, wie für die erste weitere Schicht beschrieben.

Bevorzugt sind die erste weitere Schicht und/oder die zweite weitere Schicht leicht von der Klebstoffschicht ablösbar. Unter leicht ablösbar wird erfindungsgemäß verstanden, dass ein Verwender der Klebstoffschicht das Ablösen der ersten weiteren Schicht und/oder der zweiten weiteren Schicht ohne merkbaren Kraftaufwand vornehmen kann. Bevorzugt liegt der Kraftaufwand zum Ablösen der ersten weiteren Schicht und/oder zweiten weiteren Schicht in einem Bereich von 0,02 bis 2 N/ 10 mm, bevorzugt bei 0,05 bis 1 N/ 10 mm.

Die erste weitere und/oder die zweite weitere Schicht sind bevorzugt so ausgestaltet, dass sie die Klebstoffschicht vor äußeren Einflüssen, wie Staub, Flüssigkeiten, Feuchtigkeit, Temperatur, Druck und anderen Einflüssen schützen. Die erste weitere und/oder die zweite weitere Schicht werden bevorzugt für Transportzwecke der Klebstoffschicht über die Klebstoffschicht überlagert. Die erste weitere und/oder die zweite weitere Schicht dienen vor allem dem leichten Übertragen der Klebstoffschicht auf die Oberfläche eines Produktes.

Bevorzugt ist ein Produkt, wobei das Produkt einen Klebstoff, wie er zuvor beschrieben wurde, beinhaltet und weiterhin mindestens eines der folgenden Merkmale aufweist:
- mindestens ein Substrat,
- mindestens ein Bauteil, beinhaltend mindestens eine Bauteiloberfläche.

Weiterhin ist es bevorzugt, dass das Produkt mindestens eines, bevorzugt zwei, oder bevorzugt alle der folgenden Merkmale aufweist:
- mindestens eine erste Schicht,
- mindestens eine erste weitere Schicht,
- mindestens eine zweite weitere Schicht.

Das Produkt kann jedes Produkt sein, das der Fachmann auswählen würde, welches eine Klebstoffschicht aufweisen kann. Bevorzugt ist das Produkt ausgewählt aus der Gruppe bestehend aus einem medizinischen Produkt, einem Haushaltsprodukt, einem Verkehrsmittel, einem Kommunikationsmittel, einem oder einer Kombination aus mindestens zwei hiervon.

Das medizinische Produkt kann jedes Produkt sein, das der Fachmann für medizinische Zwecke einsetzen würde. Unter medizinischem Produkt wird erfindungsgemäß jedes Produkt verstanden, das durch medizinisches Personal, wie Ärzte, Krankenschwestern, Arzthelferinnen usw. am Patienten angewendet wird oder der Patient selber zur Überwachung eines Parameters, zur Behandlung einer Krankheit oder Wunde oder zur Verbesserung seines Gesundheitszustandes an sich oder einer anderen Person anwendet. Das medizinische Produkt ist bevorzugt ausgewählt aus der Gruppe bestehend aus einem medizinischen Gerät, einem medizinischen Artikel oder einer Kombination hieraus. Im Unterschied zum medizinischen Artikel weist das medizinische Gerät eine Stromversorgung oder zumindest eine Einrichtung zur Verbindung mit einer Stromversorgung auf.

Das medizinische Gerät kann jedes Gerät sein, das der Fachmann zur Untersuchung oder Behandlung eines Patienten auswählen würde. Das medizinische Gerät ist bevorzugt ausgewählt aus der Gruppe bestehend aus einem diagnostischen Gerät, einem therapeutischen Gerät, einem chirurgischen Gerät oder einer Kombination aus mindestens zwei hiervon. Beispiele für diagnostische Geräte sind ein Temperaturmessgerät, ein Blutdruckmessgerät, ein Pulsmessgerät, ein Blutzuckermessgerät sowie deren Befestigungselemente am Körper des Nutzers. Beispiele für therapeutische Geräte sind ein Gerät zur Unterdruckwundbehandlung, einem Herzschrittmacher, einer Insulinpumpe, einem Defibrillator, z.B. einem implantierbaren Defibrillator, oder eine Kombination aus mindestens zwei hiervon. Beispiele für ein chirurgisches Gerät sind Zahnbehandlungsgeräte wie Zahnbohrer, elektrisches Skalpell oder Kombination aus mindestens zwei hiervon.

Der medizinische Artikel kann jeder Artikel sein, den der Fachmann zu Behandlung eines Patienten auswählen würde. Der medizinische Artikel ist bevorzugt ausgewählt aus der Gruppe bestehend aus einem Katheter, einem Behältnis für einen künstlichen Darmausgang, einem medizinischen Band (tape), einem Skalpell, einer Spritze, einer Kanüle, einem Wundbehandlungsmittel, wie einem Pflaster, einer medizinischen Binde, einem wiederverwertbarem Stofftuch, einem Einmal-Stofftuch oder einer Kombination aus mindestens zwei hiervon. Die charakteristische Eigenschaft der medizinischen Binde, dem wiederverwertbaren Stofftuch, dem Einmal-Stofftuch ist ihre Fähigkeit zur Aufnahme von Flüssigkeiten, insbesondere Blut, wie sie bei diagnostischen, therapeutischen oder chirurgischen Eingriffen stattfinden können. Die Unterscheidung zwischen der Binde und dem Stofftuch erfolgt aufgrund ihrer Materialzusammensetzung. Die Binde kann beispielsweise sowohl natürliche Materialien, wie Baumwolle und/oder Wolle in Kombination mit künstlichen Materialien enthalten, während das Stofftuch rein aus Baumwolle besteht.

Bevorzugt ist das Produkt ausgewählt aus der Gruppe bestehend aus einem Behältnis für einen künstlichen Darmausgang, einem Wundbehandlungsmittel, einem medizinischen Band (tape), einem Gerät zur Unterdruckwundbehandlung und einem wearable device, also einem tragbaren, elektronischen, medizinischen Gerät, z.B. ein Blutdruckmesser oder ein anderer Sensor, der zur Überwachung des Nutzers auf dessen Haut geklebt wird, oder einer Kombination aus mindestens zwei hieraus.

Das Haushaltsprodukt kann jedes Haushaltsprodukt sein, das der Fachmann für diesen Zweck auswählen würde. Das Haushaltsprodukt ist bevorzugt ausgewählt aus der Gruppe bestehend aus einem Mixer, einem Rührgerät, einer Schneidemaschine, einer Anrichteplatte oder einer Kombination aus mindestens zwei hiervon.

Das Verkehrsmittel kann jedes Verkehrsmittel sein, das der Fachmann für diesen Zweck auswählen würde. Das Verkehrsmittel ist bevorzugt ausgewählt aus der Gruppe bestehend aus einem Auto, einem Flugzeug, einem Motorrad, einem Fahrrad, einem Roller, einem Inline-Skater oder einer Kombination aus mindestens zwei hiervon.

Das Kommunikationsmittel kann jedes Kommunikationsmittel sein, das der Fachmann für diesen Zweck auswählen würde, insbesondere einem Gerät, das zur Datenübermittlung dient. Das Kommunikationsmittel ist bevorzugt ausgewählt aus der Gruppe bestehend aus einem Telefon, einem mobilen Telefon, einem Faxgerät, einem Modem, einem Computer, einem GPS-Gerät, einem Navigationsgerät oder einer Kombination aus mindestens zwei hiervon.

Das Produkt kann den Klebstoff für verschiedene Zwecke beinhalten. Das Produkt beinhaltet den Klebstoff bevorzugt zur Verbindung von Produktteilen untereinander. In einer zusätzlichen oder alternativen Ausgestaltung des Produkts, beinhaltet das Produkt den Klebstoff, um das Produkt an ein weiteres Produkt, einen weiteren Gegenstand oder an die Haut eines Nutzers des Produktes zu befestigen. Der Gegenstand kann jeder Gegenstand sein, den der Fachmann mit dem Produkt verbinden würde. Bevorzugt dient der Klebstoff, den das Produkt beinhaltet, um das Produkt an der Haut eines Nutzers zu befestigen.

Das Substrat kann jedes Substrat sein, das der Fachmann für ein erfindungsgemäßes Produkt auswählen würde. Das Substrat beinhaltet bevorzugt ein Material ausgewählt aus der Gruppe bestehend aus einem Polymer, einem Metall, einem Gewebe, einem Vlies, einem Mineral oder einer Kombination aus mindestens zwei hiervon. Das Material des Substrats, wie das Polymer, das Metall, das Gewebe, das Vlies, das Mineral oder deren Kombinationen sind bevorzugt aus der Gruppe der Materialien ausgewählt, wie bereits für die erste weitere Schicht beschrieben. Das Substrat kann jede Form aufweisen, die der Fachmann für das Substrat auswählen würde. Bevorzugt weist das Substrat eine flächige Form auf. Bevorzugt weist das Substrat eine Dicke in einem Bereich von 10 µm bis 10 cm, oder bevorzugt in einem Bereich von 100 µm bis 10 cm, oder bevorzugt in einem Bereich von 1 mm bis 10 cm, oder bevorzugt in einem Bereich von 10 µm bis 1 cm, oder bevorzugt in einem Bereich von 10 µm bis 1 mm, oder bevorzugt in einem Bereich von 1 mm bis 1 cm. Das Substrat weist bevorzugt eine flexible Struktur auf. Bevorzugt ist das Substrat so flexibel, dass es sich den Konturen eines Körpers eines Menschen anpassen kann.

Bevorzugt ist das das Substrat ausgewählt aus der Gruppe bestehend aus einer Folie, v.a. eine thermoplastische PU-Folie, einem Trennpapier, einem Vlies (Non-Woven z.B. für Klebebänder), einem PU-Schaum oder einer Kombination aus mindestens zwei hiervon

Das Bauteil kann jedes Bauteil sein, das der Fachmann für ein erfindungsgemäßes Produkt auswählen würde. Das Bauteil ist bevorzugt ausgewählt aus der Gruppe bestehend aus einem Gerätebauteil der Geräte, die zuvor im Zusammenhang mit dem Produkt beschrieben wurden. Das Material aus dem das Bauteil, insbesondere die mindestens eine Bauteiloberfläche, besteht ist bevorzugt aus der Gruppe der Materialien ausgewählt, wie bereits für die erste weitere Schicht beschrieben.

Das Bauteil kann einen Teil des Produktes darstellen oder das gesamte Produkt. Der Klebstoff dient bevorzugt dazu verschiedene Bauteile des Produktes miteinander zu dem Produkt zu verbinden. Alternativ oder zusätzlich kann der Klebstoff dazu dienen das Bauteil mit der Haut eines Nutzers des Produktes zu verbinden. Wiederum alternativ oder zusätzlich kann der Klebstoff dazu dienen, das Produkt mit einem weiteren Gegenstand zu verbinden. Der Gegenstand kann jeder Gegenstand sein, den der Fachmann mit dem Produkt verbinden würde.

Das Bauteil beinhaltet mindestens eine Bauteiloberfläche. Mindestens ein Teil der Bauteiloberfläche dient bevorzugt dazu mit dem Klebstoff in Kontakt zu treten bzw. von dem Klebstoff überlagert zu werden. Über den an der Bauteiloberfläche befindlichen Klebstoff kann das Bauteil mit anderen Gegenständen oder der Haut eines Nutzers verbunden werden.

Der Klebstoff, der in dem Produkt enthalten ist, wird bevorzugt punktförmig, teilflächig oder vollflächig auf das Substrat oder mindestens einer Bauteiloberfläche eines Bauteils aufgebracht. Bevorzugt wird der Klebstoff beispielsweise in Form eines bestimmten Musters, bevorzugt eines wiederkehrenden oder replikativen Musters auf das Substrat oder das Bauteil, insbesondere auf mindestens einen Teil einer Bauteiloberfläche, aufgebracht. Bevorzugt wird der Klebstoff in Form einer Schicht auf das Substrat oder mindestens einer Bauteiloberfläche eines Bauteils aufgebracht.

Bevorzugt ist der Klebstoff, der in dem Produkt enthalten ist in Form der ersten Schicht, wie sie im Zusammenhang mit der Klebstoffschicht beschrieben wurde, mit dem Produkt verbunden. Bevorzugt ist die Klebstoffschicht mit dem Substrat oder dem Bauteil direkt verbunden.

Vor, während oder nach der Verbindung des Substrats oder des Bauteils mit der Klebstoffschicht, kann die Klebstoffschicht auf einer ihrer Oberflächen mindestens eine erste weitere Schicht oder eine zweite weitere Schicht aufweisen. Weist die Klebstoffschicht vor der Verbindung mit dem Substrat oder dem Bauteil auf mindestens zwei Oberflächen jeweils eine weitere Schicht auf, so wird mindestens eine der weiteren Schichten vor Kontakt mit dem Substrat oder dem Bauteil entfernt. Die andere weitere Schicht, zum Beispiel die zweite weitere Schicht, kann bis zum Verbinden des Substrats oder des Bauteils mit einem Gegenstand oder der Haut eines Patienten zum Schutz der Klebstoffschicht auf dieser verbleiben. Die erst Schicht, die erste weitere Schicht sowie die zweite weitere Schicht sind bevorzugt jeweils auf die gleiche Weise aufgebaut und ausgestaltet, wie bereits oben im Zusammenhang mit der Klebstoffschicht beschrieben.

In einer bevorzugten Ausgestaltung des Produkts, ist das Produkt ausgewählt aus der Gruppe bestehend aus einem Pflaster, einem (Wund-)Verband, einem Tape, einem selbstklebenden Band, einem Stomabeutel für einen künstlichen Darmausgang, einer Blutaufnahmebinde, einer Bandage, einem medizinisches Gerät oder zumindest einem Bestandteil dieser Endprodukte.

Ein weiterer Gegenstand der Erfindung ist ein Kit aufweisend die Komponenten (V1) und (V2). Die Bestandteile, deren Verhältnisse sowie das Verfahren zu der Herstellung der Komponenten (V1) und (V2) entsprechen denen im Zusammenhang mit dem erfindungsgemäßen Klebstoff beschriebenen Komponenten A) bis L). Die Komponenten (V1) und (V2) werden bevorzugt entsprechend dem erfindungsgemäßen Verfahren zur Herstellung eines Schichtaufbaus, beinhaltend mindestens eine Klebstoffschicht verarbeitet.

### Beispiele:

Die Erfindung wird anhand der nachfolgenden Beispiele näher erläutert, ohne jedoch darauf beschränkt zu sein.

### Methoden:

Sofern nicht abweichend gekennzeichnet, beziehen sich alle Prozentangaben auf das Gewicht und die Gesamtmenge bzw. auf das Gesamtgewicht der Zusammensetzungen.

Sofern nicht abweichend vermerkt, beziehen sich alle analytischen Messungen auf Messungen bei Temperaturen von 23 °C.

Die Feststoff- bzw. Festkörpergehalte wurden entsprechend DIN EN ISO 3251 durch Erhitzen einer ausgewogenen Probe auf 105 °C bis zur Gewichtskonstanz ermittelt. Bei Gewichtskonstanz wurde durch erneutes Auswiegen der Probe der Festkörpergehalt berechnet.

NCO-Werte wurden, wenn nicht ausdrücklich anders erwähnt, volumetrisch gemäß DIN-EN ISO 11909 bestimmt.

Die Kontrolle auf freie NCO-Gruppen wurde mittels IR-Spektroskopie (Bande bei 2260 cm⁻¹) durchgeführt.

Die angegebenen Viskositäten wurden mittels Rotationsviskosimetrie nach DIN 53019 bei 23 °C mit einem Rotationsviskosimeter der Firma Anton Paar Germany GmbH, Ostfildern, DE bestimmt (1 Pa s = 1 N/m²*s).

Die Bestimmung der mittleren Teilchengrößen (angegeben ist das Zahlenmittel) der Polyurethan-Dispersionen erfolgte nach Verdünnen mit entionisiertem Wasser mittels Laserkorrelations-Spektroskopie (Gerät: Malvern Zetasizer 1000, Malver Inst. Limited).

Der pH-Wert wurde gemäß der in DIN ISO 976 beschriebenen Methode an der unverdünnten Probe gemessen.

Die Glasübergangstemperatur T_{g} wurde mittels dynamischer Differenzkalorimetrie (DSC) in Anlehnung an die DIN EN 61006, Verfahren A, bestimmt, wobei ein DSC Gerät (Kalorimeter Pyris Diamond DSC von Perkin-Elmer) verwendet wird, das zur Bestimmung von T_{g} mit Indium und Blei kalibriert ist. Es werden 10 mg der zu untersuchenden Substanz in einen verschließbaren Aluminium-Tiegel eingewogen und dieser verschlossen. Es werden drei unmittelbar aufeinander folgende Durchläufe einer Aufheizungen von -100°C bis +150°C, Heizrate 20 K/min, mit anschließender Abkühlung Kühlrate 320 K/min vorgenommen und die dritte Aufheizkurve zur Bestimmung der Werte verwendet. Als T_{g} wird die Temperatur bei der halben Höhe einer Glasübergangsstufe bestimmt.

### Bestimmung der Wasserdampfdurchlässigkeit, auch MVTR (Moisture vapor transmission rate)

Die Bestimmung der MVTR erfolgt in Anlehnung an die DIN EN13726-2 (Teil 3.2). Dabei wird ein Metallzylinder, wie in der DIN beschrieben mit Wasser gefüllt und durch den zu untersuchenden Film bzw. die zu untersuchende Schicht an der Oberseite verschlossen. Anschließend wird das Gesamtgewicht (Becher mit Wasser und Film) mittels Waage bestimmt. Der Messaufbau wird für 24 h bei 37°C gelagert und wiederum das Gewicht bestimmt. Durch Subtraktion lässt sich der Wasserverlust, der durch den Film verdampft, ermitteln. Die MVTR wird in g/(m²*24 h) angegeben.

### Bestimmung der Schälkraft (90°-Abzugstest) nach DIN EN 1464

Die Bestimmung der Schälkraft erfolgte mit einer Zugprüfmaschine gemäß DIN EN ISO 527-1 und einer Rollenschälvorrichtung. Die zu untersuchende Klebstoffschicht wurde rückseitig mit einem Klebeband (TESA4104) verstärkt und passend auf 20 x 2cm² zugeschnitten. Die Trennpapierseite der Klebstoffschicht wird auf ein mit Aceton gereinigtes Alublech (Firma Krüppel aus Krefeld; reinst Aluminium 99,9%) (20 x 2 cm²) mit 3 Doppelhüben einer 4kg Walze geklebt. Nach 60 min Kontaktzeit zum Aluminiumsubstrat erfolgt die Bestimmung der Schälkraft nach DIN 1464 in einem Schälwinkel von 90° unter Trennung der Fügeteile. Die Schälgeschwindigkeit beträgt 300 mm/min. Die Schälkraft wird in N/20mm angegeben.

**Verwendete Substanzen und Abkürzungen:**

| | |
|---|---|
| Diaminosulfonat: | NH₂-CH₂CH₂-NH-CH₂CH₂-SO₃Na (45 %ig in Wasser) |
| PPG | Polypropylenglykol, Covestro AG, Leverkusen, DE. PPG wurde, soweit nicht anders angegeben, über KOH-Katalyse hergestellt. |
| Desmodur N 3300 | Aliphatisches Polyisocyanat (HDI-Isocyanurat), NCO-Gehalt ca. 21,8 %, Covestro Deutschland AG, Leverkusen, Deutschland |
| Wasser | Durch Ionenaustauscher vollentsalztes Wasser |

Die eingesetzten Isocyanate-Komponenten sind Handelsprodukte der Covestro Deutschland AG, Leverkusen, DE. Weitere Chemikalien, die in den Beispielen erwähnt werden sind von Sigma-Aldrich Chemie GmbH, Taufkirchen, DE. Die Rohstoffe wurden, soweit nicht anders erwähnt, ohne weitere Reinigung oder Vorbehandlung eingesetzt.

### Nicht erfindungsgemäße Polyurethanharnstoffdispersion 1 (Vergleichsbeispiel: Polyurethan-harnstoffdispersion ohne Carbonsäuregruppen-haltige bzw. Carboxylat-haltige Bausteine)

60,0 g Polypropylenglykol mit einer zahlenmittleren Molmasse von 1000 g/mol und 280 g Polypropylenglykol mit einer zahlenmittleren Molmasse von 2000 g/mol wurden auf 65°C aufgeheizt. Anschließend wurde ein Gemisch aus 30,1 g Hexamethylendiisocyanat und 39,8 g Isophorondiisocyanat sowie 2 Tropfen Zinnoktanoat zugegeben und solange bei 130°C gerührt bis der theoretische NCO-Wert unterschritten war (ca. 90 min). Das fertige Präpolymer wurde mit 730 g Aceton bei 50°C gelöst und wurde anschließend bei 40°C eine Lösung aus 3,0 g Ethylendiamin, 18,9 g Diaminosulfonat, 3,6 g Diethanolamin und 74 g Wasser zudosiert. Die Nachrührzeit betrug 15 min. Danach wurde durch Zugabe von 550 g Wasser dispergiert. Es folgte die Entfernung des Lösemittels durch Destillation im Vakuum und es wurde eine lagerstabile Dispersion erhalten; der Festgehalt wurde durch Zusatz von Wasser eingestellt.

| | |
|---|---|
| Feststoffgehalt: | 41 % |
| Partikelgröße (LKS): | 160 nm |
| Viskosität: | 365 mPa s |

### Polyurethanharnstoffdispersion PUD 2 (erfindungsgemäß)

60,0 g Polypropylenglykol mit einer zahlenmittleren Molmasse von 1000 g/mol und 280 g Polypropylenglykol mit einer zahlenmittleren Molmasse von 2000 g/mol wurden auf 65°C aufgeheizt. Anschließend wurde ein Gemisch aus 30,1 g Hexamethylendiisocyanat und 39,8 g Isophorondiisocyanat sowie 2 Tropfen Zinnoktanoat zugegeben und solange bei 130°C gerührt bis der theoretische NCO-Wert unterschritten war (ca. 90 min). Das fertige Präpolymer wurde mit 730 g Aceton bei 50°C gelöst und wurde anschließend bei 40°C eine Lösung aus 0,3 g Ethylendiamin, 18,9 g Diaminosulfonat, 3,6 g Diethanolamin, 13,1 g 6-Aminohexansäure und 176 g Wasser zudosiert. Die Nachrührzeit betrug 15 min. Danach wurde durch Zugabe von 470 g Wasser dispergiert. Es folgte die Entfernung des Lösemittels durch Destillation im Vakuum und es wurde eine lagerstabile Dispersion erhalten; der Festgehalt wurde durch Zusatz von Wasser eingestellt.

| | |
|---|---|
| Feststoffgehalt: | 36 % |
| Partikelgröße (LKS): | 217 nm |
| Viskosität: | 3550 mPa s |

### Polyurethanharnstoffdispersion PUD 3 (erfindungsgemäß)

60,0 g Polypropylenglykol mit einer zahlenmittleren Molmasse von 1000 g/mol und 280 g Polypropylenglykol mit einer zahlenmittleren Molmasse von 2000 g/mol wurden auf 65°C aufgeheizt. Anschließend wurde ein Gemisch aus 4,3 g Desmodur N 3300, 28,3 g Hexamethylendiisocyanat und 39,8 g Isophorondiisocyanat sowie 2 Tropfen Zinnoktanoat zugegeben und solange bei 130°C gerührt bis der theoretische NCO-Wert unterschritten war (ca. 90 min). Das fertige Präpolymer wurde mit 730 g Aceton bei 50°C gelöst und wurde anschließend bei 40°C eine Lösung aus 2,0 g Ethylendiamin, 18,9 g Diaminosulfonat, 3,6 g Diethanolamin, 4,2 g 6-Aminohexansäure und 124 g Wasser zudosiert. Die Nachrührzeit betrug 15 min. Danach wurde durch Zugabe von 508 g Wasser dispergiert. Es folgte die Entfernung des Lösemittels durch Destillation im Vakuum und es wurde eine lagerstabile Dispersion erhalten; der Festgehalt wurde durch Zusatz von Wasser eingestellt.

| | |
|---|---|
| Feststoffgehalt: | 40 % |
| Partikelgröße (LKS): | 183 nm |
| Viskosität: | 470 mPa s |

### Polyurethanharnstoffdispersion PUD 4 (erfindungsgemäß)

40,5 g Polypropylenglykol mit einer zahlenmittleren Molmasse von 1000 g/mol und 276 g Polypropylenglykol mit einer zahlenmittleren Molmasse von 2000 g/mol sowie 6,3 g Dimethylolpropionsäure wurden auf 65°C aufgeheizt. Anschließend wurde ein Gemisch aus 33,9 g Hexamethylendiisocyanat und 44,8 g Isophorondiisocyanat sowie 2 Tropfen Zinnoktanoat zugegeben und solange bei 130°C gerührt bis der theoretische NCO-Wert unterschritten war (ca. 90 min). Das fertige Präpolymer wurde mit 710 g Aceton bei 50°C gelöst und wurde anschließend bei 40°C eine Lösung aus 3,3 g Ethylendiamin, 21,2 g Diaminosulfonat, 4,0 g Diethanolamin, und 83 g Wasser zudosiert. Die Nachrührzeit betrug 15 min. Danach wurde durch Zugabe von 530 g Wasser dispergiert. Es folgte die Entfernung des Lösemittels durch Destillation im Vakuum und es wurde eine lagerstabile Dispersion erhalten; der Festgehalt wurde durch Zusatz von Wasser eingestellt.

| | |
|---|---|
| Feststoffgehalt: | 39 % |
| Partikelgröße (LKS): | 143 nm |
| Viskosität: | 530 mPa s |

### Herstellung der Klebstofffilme AB3*, AB5*, AB7* mit Vernetzer:

50g der Polyurethanharnstoffdispersion wurden mit 0,5g einer 10 Gew.-% wässrigen Rheolate 208 Dispersion und einer entsprechenden Menge Desmodur XP2802 (Menge siehe Tabelle 1) in einem Speedmixer-Becher vorgelegt. Die blasenfreie Vermischung zu einer Polyurethanharnstoffzusammensetzung erfolgte in dem Speedmixer bei einer Umdrehungszahl von 2750 min⁻¹ für 1 Minute. Nach der Applizierung mittels Ausstreichbalken der Firma Erichsen (200µm) auf ein Trennpapier der Firma Felix Schöller mit der Bezeichnung Y3200 (glänzende Seite) erfolgte die Trocknung für 20 min bei 40°C und für 10 min bei 130°C. Anschließend erfolgte die Schälkraftmessung.

### Herstellung des Klebstofffilms ohne Vernetzer AB2, AB4, AB6:

50g der Polyurethanharnstoffdispersion wurden mit 0,5g (bzw. 2g beim Vergleich AB1) einer 10 Gew.-% wässrigen Rheolate 208 Dispersion in einem Speedmixer-Becher vorgelegt. Die blasenfreie Vermischung zu einer Polyurethanharnstoffzusammensetzung erfolgte in dem Speedmixer bei einer Umdrehungszahl von 2750 min⁻¹ für 1 Minute. Nach der Applizierung mittels Ausstreichbalken der Firma Erichsen (200µm) auf ein Trennpapier der Firma Felix Schöller mit der Bezeichnung Y3200 (glänzende Seite) erfolgte die Trocknung für 20 min bei 40°C und für 10 min bei 130°C. Anschließend erfolgte die Schälkraftmessung.

**Tabelle 1**

| Formulierungen | AB1 | AB2 | AB3* | AB4 | AB5* | AB6 | AB7* |
|---|---|---|---|---|---|---|---|
| PUD 1(Vergleich) | 50g | | | | | | |
| PUD 3 (V1) | | 50g | 50g | | | | |
| PUD 4 (V1) | | | | 50g | 50g | | |
| PUD 2 (V1) | | | | | | 50g | 50g |
| | | | | | | | |
| Rheolate 208 (10 Gew.% wässrig) | 2g | 0,5g | 0,5g | 0,5g | 0,5g | 0,5g | 0,5g |
| Desmodur XP2802 (Carbodiimid) (V2) | | | 1,6g | | 4,8g | | 4,1g |
| | | | | | | | |
| Schälkraft (N/20mm) | Kohäsionsbruch | 20,1 | 5,9 | 5,1 | 1,4 | 8,4 | 3,6 |

| | | | | | | | |
|---|---|---|---|---|---|---|---|
| * entspricht erfindungsgemäßen PUD-Klebstoffen, alle anderen sind nicht-erfindungsgemäße PUD-Klebstoffe | | | | | | | |

Wie deutlich an den Ergebnissen in Tabelle 1 zu erkennen ist, könnte aus der Vergleichs-PUD 1 kein Film erzeugt werden, der als Klebstoff für eine Wundauflage überhaupt geeignet wäre, da er beim Versuch ihn von einer Oberfläche abzureißen in sich bricht, also ein Kohäsionsbruch stattfand. Dahingegen konnte gezeigt werden, dass bei Zugabe von Carbodiimid (V2) zu erfindungsgemäßen PUDs (V1) eine Absenkung der Klebkraft erreicht werden konnte. Dies ist aus Tabelle 1 anhand der Werte für die Schälkraft der erfindungsgemäßen Beispiele AB3*, AB5* und AB7* abzulesen, die deutlich gegenüber den Werten der reinen PUD Komponente (V1) der Beispiele AB2, AB4 und AB6 abgesenkt sind. Wie hiermit überraschender Weise gezeigt werden konnte ist nicht nur die richtige Wahl der PUD entscheidend sondern auch die Zugabe von Carbodiimid, um gezielt eine gewünschte Klebkraft des Klebstoffs zu erreichen.

## Patentansprüche

1. Ein Klebstoff, herstellbar aus einer wässrigen Polyurethanharnstoff-Dispersion, enthaltend
(V1) einen Polyurethanharnstoff, welcher erhältlich ist, durch Umsetzung von wenigstens
A) einer aliphatischen Polyisocyanat-Komponente mit einer mittleren Isocyanatfunktionalität von ≥ 1,8 und ≤ 2,6,
B) einer polymeren Polyether-Polyol-Komponente,
C) einer aminofunktionellen Kettenverlängerer-Komponente mit mindestens 2 isocyanatreaktiven Aminogruppen, enthaltend wenigstens eine aminofunktionelle Verbindung C1), die keine ionischen oder ionogenen Gruppen aufweist und/oder eine aminofunktionelle Verbindung C2), die ionische oder ionogene Gruppen aufweist,
D) gegebenenfalls weiteren hydrophilierenden Komponenten, die unterschiedlich sind von C2),
E) gegebenenfalls hydroxyfunktionellen Verbindungen mit einem Molekulargewicht von 62 bis 399 mol/g,
F) gegebenenfalls weitere polymere Polyole, welche unterschiedlich sind von B),
G) gegebenenfalls einer Verbindung, die genau eine isocyanatreaktive Gruppe aufweist, oder einer Verbindung, die mehr als eine isocyanatreaktive Gruppe aufweist, wobei nur eine der isocyanatreaktiven Gruppen unter den gewählten Umsetzungsbedingungen mit den in der Reaktionsmischung vorhandenen Isocyanatgruppen reagiert und
H) gegebenenfalls einer aliphatischen Polyisocyanat-Komponente mit einer mittleren Isocyanatfunktionalität von > 2,6 und ≤ 4,
wobei mindestens eine der Komponenten C2) oder D) in dem Klebstoff enthalten ist,
wobei der Polyurethanharnstoff der Polyurethanharnstoff-Dispersion Carboxygruppen oder Carboxylatgruppen aufweist, sowie
(V2) eine Polycarbodiimid-Komponente.

2. Der Klebstoff nach Anspruch 1, wobei die Komponente A) Isophorondiisocyanat, Hexamethylendiisocyanat oder ein Gemisch aus Isophorondiisocyanat und Hexamethylendiisocyanat ist.

3. Der Klebstoff nach einem der Ansprüche 1 oder 2, wobei die Komponente B) Poly(propylenglykol)polyetherpolyole enthält oder daraus besteht.

4. Der Klebstoff nach einem der Ansprüche 1 bis 3, wobei die Komponente B) eine mittlere Molekularmasse in einem Bereich von 400 bis 4000 g/mol aufweist.

5. Der Klebstoff nach einem der Ansprüche 1 bis 4, wobei die Komponente B) ein Gemisch aus Poly(propylenglykol)polyetherpolyolen enthält oder daraus besteht, wobei sich die Poly(propylenglykol)polyetherpolyole in ihren zahlenmittleren Molekulargewichten um wenigstens 100 g/mol unterscheiden.

6. Der Klebstoff nach einem der Ansprüche 1 bis 5, wobei die Komponente C) wenigstens eine aminofunktionelle Verbindung C1), die keine ionischen oder ionogenen Gruppen aufweist und eine aminofunktionelle Verbindung C2), die ionische oder ionogene Gruppen aufweist enthält.

7. Der Klebstoff nach einem der Ansprüche 1 bis 6, wobei es sich bei der Komponente D) ausschließlich um nichtionisch hydrophilierende Komponenten D1) handelt.

8. Der Klebstoff nach einem der Ansprüche 1 bis 7, wobei der Polyurethanharnstoff erhältlich ist indem isocyanatfunktionelle Polyurethanpräpolymere a) aus den Komponenten A), B) und gegebenenfalls D) und/oder C2), sowie gegebenenfalls den Verbindungen E) und/oder H) hergestellt werden und deren freie NCO-Gruppen anschließend ganz oder teilweise mit der aminofunktionellen Kettenverlängerer-Komponente C), sowie der Komponente G) und gegebenenfalls der Komponente D) umgesetzt werden.

9. Der Klebstoff nach einem der Ansprüche 1 bis 8, wobei der Polyurethanharnstoff einen Tg ≤ - 25 °C aufweist.

10. Der Klebstoff nach einem der vorhergehenden Ansprüche, wobei die Polycarbodiimid-Komponente (V2) aus aliphatischen oder cycloaliphatischen Polyisocyanaten hergestellt ist.

11. Der Klebstoff nach einem der vorhergehenden Ansprüche, wobei die Polycarbodiimid-Komponente (V2) Polycarbodiimid-Verbindungen enthaltend mindestens drei Carbodiimidgruppen aufgebaut entsprechend der Formel (I),
R⁴ - [ R¹ - N=C=1]ₙ - R⁵ (I)
beinhaltet, wobei
n für eine ganze Zahl von 3 bis 100, bevorzugt von 3 bis 50, oder bevorzugt von 3 bis 20, oder bevorzugt von 3 bis 10 steht,
R¹ und R⁵ jeweils unabhängig voneinander für lineare oder verzweigte, aliphatische oder cyclo-aliphatische, gegebenenfalls substituierte Gruppen mit 4 bis 100, oder bevorzugt von 4 bis 50, oder bevorzugt von 4 bis 20 C-Atomen steht.
R⁴ für lineare oder verzweigte, aliphatische oder cyclo-aliphatische, gegebenenfalls substituierte Gruppen mit 1 bis 100, oder bevorzugt von 1 bis 50, oder bevorzugt von 1 bis 20 C-Atomen steht

12. Der Klebstoff nach einem der vorhergehenden Ansprüche, wobei das Polycarbodiimid (V2) Verbindungen der allgemeinen Formel II beinhaltet, 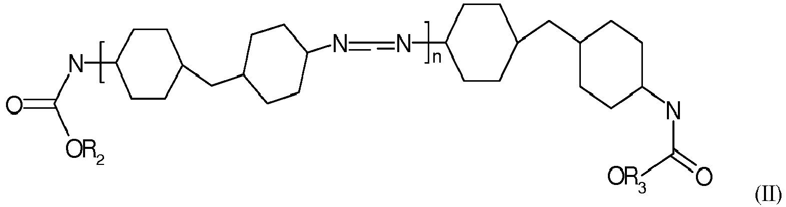 worin R₂ und R₃, unabhängig voneinander, für einen von einer Verbindung ausgewählt aus der Gruppe bestehend aus einem Monoalkoxy-poly(ethylenglykol) gemäß der allgemeinen Formel (III)
R⁶ - O - (CH₂ - CH₂ - O)ₘ - H (III)
mit R⁶ = C₁ bis C₃₀ Alkyl oder Acylgruppe und m = 4 bis 30
und einem von C₁ bis C₃₀ Alkohol oder einem C₁ bis C₃₀ Monoalkoxyethylenglykol abgeleiteten Rest stehen.

13. Eine wässrige Polyurethanharnstoff-Dispersion enthaltend
(V1) einen amorphen Polyurethanharnstoff, welcher erhältlich ist durch Umsetzung von wenigstens
A) einer aliphatischen Polyisocyanat-Komponente mit einer mittleren Isocyanatfunktionalität von ≥ 1,8 und ≤ 2,6,
B) einer polymeren Polyether-Polyol-Komponente,
C) einer aminofunktionellen Kettenverlängerer-Komponente mit mindestens 2 isocyanatreaktiven Aminogruppen, enthaltend wenigstens eine aminofunktionelle Verbindung C1), die keine ionischen oder ionogenen Gruppen aufweist und/oder eine aminofunktionelle Verbindung C2), die ionische oder ionogene Gruppen aufweist,
D) gegebenenfalls weiteren hydrophilierenden Komponenten, die unterschiedlich sind von C2),
E) gegebenenfalls hydroxyfunktionellen Verbindungen mit einem Molekulargewicht von 62 bis 399 mol/g,
F) gegebenenfalls weitere polymere Polyolen, welche unterschiedlich sind von B)
G) einer Verbindung, die genau eine isocyanatreaktive Gruppe aufweist, oder einer Verbindung, die mehr als eine isocyanatreaktive Gruppe aufweist, wobei nur eine der isocyanatreaktiven Gruppen unter den gewählten Umsetzungsbedingungen mit den in der Reaktionsmischung vorhandenen Isocyanatgruppen reagiert und
H) gegebenenfalls einer aliphatischen Polyisocyanat-Komponente mit einer mittleren Isocyanatfunktionalität von > 2,6 und ≤ 4,
wobei mindestens eine der Komponenten C2) oder D) in dem Klebstoff enthalten ist,
wobei die Komponenten B) und F) zusammen ≤ 30 Gew.-% an Komponente F), bezogen auf die Gesamtmasse der Komponenten B) und F) enthalten
sowie
(V2) eine Polycarbodiimid-Komponente.

14. Ein Verfahren zur Herstellung einer Klebstoffschicht, umfassend mindestens die Schritte:
(I) Mischen einer Polycarbodiimid-Komponente (V2) zu einem Polyurethanharnstoff (V2) unter Erhalt einer Polyurethanharnstoff-Dispersion gemäß Anspruch 12,
(II) Aufbringen der Polyurethanharnstoff-Dispersion aus Schritt (I) auf eine erste weitere Schicht, unter Erhalt eines Vorläufers,
(III) thermische Behandlung des Vorläufers aus Schritt (II) bei Temperaturen in einem Bereich von 20 °C bis 200 °C, unter Bildung der Klebstoffschicht.

15. Verwendung eines Klebstoffs nach einem der Ansprüche 1 bis 12 zur Befestigung eines Produktes auf einem Gegenstand oder der Haut eines Lebewesens.

16. Ein Kit, aufweisend mindestens die Komponenten:
(V1) einen amorphen Polyurethanharnstoff, welcher erhältlich ist durch Umsetzung von wenigstens
A) einer aliphatischen Polyisocyanat-Komponente mit einer mittleren Isocyanatfunktionalität von ≥ 1,8 und ≤ 2,6,
B) einer polymeren Polyether-Polyol-Komponente,
C) einer aminofunktionellen Kettenverlängerer-Komponente mit mindestens 2 isocyanatreaktiven Aminogruppen, enthaltend wenigstens eine aminofunktionelle Verbindung C1), die keine ionischen oder ionogenen Gruppen aufweist und/oder eine aminofunktionelle Verbindung C2), die ionische oder ionogene Gruppen aufweist,
D) gegebenenfalls weiteren hydrophilierenden Komponenten, die unterschiedlich sind von C2),
E) gegebenenfalls hydroxyfunktionellen Verbindungen mit einem Molekulargewicht von 62 bis 399 mol/g,
F) gegebenenfalls weitere polymere Polyolen, welche unterschiedlich sind von B)
G) gegebenenfalls einer Verbindung, die genau eine isocyanatreaktive Gruppe aufweist, oder einer Verbindung, die mehr als eine isocyanatreaktive Gruppe aufweist, wobei nur eine der isocyanatreaktiven Gruppen unter den gewählten Umsetzungsbedingungen mit den in der Reaktionsmischung vorhandenen Isocyanatgruppen reagiert und
H) gegebenenfalls einer aliphatischen Polyisocyanat-Komponente mit einer mittleren Isocyanatfunktionalität von > 2,6 und ≤ 4,
wobei mindestens eine der Komponenten C2) oder D) in dem Klebstoff enthalten ist,
wobei die Polyurethanharnstoff-Dispersion Carboxygruppen oder Carboxylatgruppen aufweist
sowie
(V2) eine Polycarbodiimid-Komponente.
